# EUROPEAN PATENT SPECIFICATION

(11) **EP 1 574 780 B1**
(45) Date of publication and mention of the grant of the patent: **21.05.2008**
(21) Application number: 03777215.9
(22) Date of filing: 03.12.2003
(51) Int. Cl.: G02B 6/00

(54) **LIGHT GUIDE PLATE, ILLUMINATING DEVICE USING SAME, AREA LIGHT SOURCE AND DISPLAY**
LICHTLEITERPLATTE, BELEUCHTUNGSVORRICHTUNG DAMIT, LICHTQUELLE UND ANZEIGE
PLAQUE GUIDE DE LUMIERE, DISPOSITIF D'ECLAIRAGE UTILISANT CETTE PLAQUE, SOURCE LUMINEUSE LOCALE ET DISPOSITIF D'AFFICHAGE

(30) Priority: 18.12.2002 JP 2002367313
(43) Date of publication of application: 14.09.2005
(73) Proprietor: Sharp Kabushiki Kaisha, Osaka-shi, Osaka 545-8522 (JP)
(72) Inventor: IWAUCHI, Kenichi, Matsudo-shi, Chiba 270-0004 (JP); WAKABAYASHI, Yasutaka, Chiba-shi, Chiba 266-0005 (JP); OOHARA, Akemi, Funabashi-shi, Chiba 274-0063 (JP); YAMANAKA, Atsushi, Chiba-shi, Chiba 266-0032 (JP)
(74) Representative: Brown, Kenneth Richard
(86) International application number: PCT/JP2003/015494
(87) International publication number: WO 2004/055429

(56) References cited:
- JP-A- 3 261 988
- JP-A- 9 063 331
- JP-A- 10 293 202
- JP-A- 2001 110 218
- JP-A- 2001 176 317
- JP-A- 2002 006 143
- JP-A- 2002 043 630
- JP-A- 2002 071 965
- JP-A- 2002 133 907
- JP-A- 2002 184 231
- JP-A- 2002 197 910

## Description

### TECHNICAL FIELD

The present invention relates to a light guide plate and a lighting apparatus capable of changing light from a point light source or a linear light source into a planar light source.

### BACKGROUND ART

In recent years, semiconductor light sources, such as LEDs (Light Emitting Diode) and LDs (Laser Diode) has been significantly improved in performance, especially in luminance and luminous efficiency. In addition, the semiconductor light sources originally have advantages, such as high color purity and a long life. Therefore, the semiconductor light sources are being utilized as a light source of illumination. Especially, in comparison with conventional light sources, the semiconductor light sources can increase color reproducibility. On this account, application of the semiconductor light source to a backlight of a liquid crystal display, an electric poster, or the like has attracted attention.

However, because of the low color rendering property (color reproducibility) of a white LED, a backlight using a light source of white LED is not frequently used as the light source of general illumination. The white LED is rather used for creating a good atmosphere, or for something which do not require high color reproducibility, such as tail lamps of cars.

In order to improve the color reproducibility, proposed is an art of constituting a lighting apparatus with a light source having a plurality of different monochromatic lights, such as a plurality of LEDs.

However, in order to produce a planar light source for the backlight of liquid crystal display, the electric poster, etc. from the point light sources, such as the LEDs or the LDs, a process of producing planar light source and a process of mixing colors of R (red), G (green), and B (blue) are necessary. The following explains a concrete example.

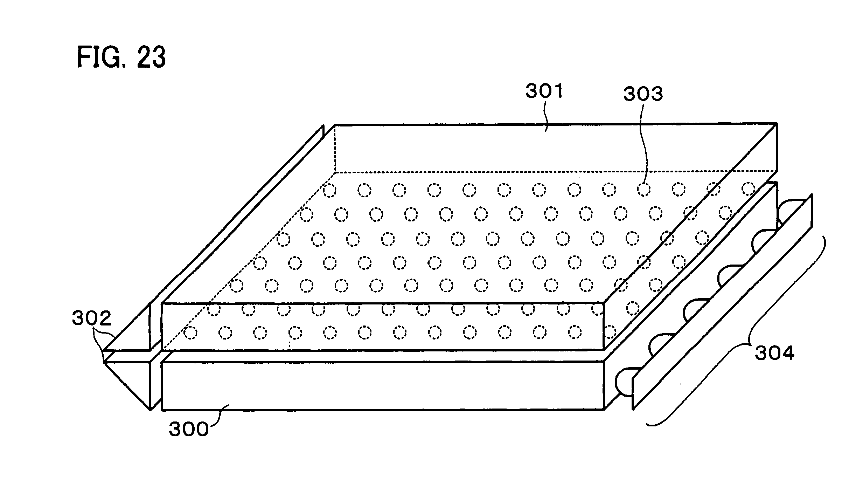

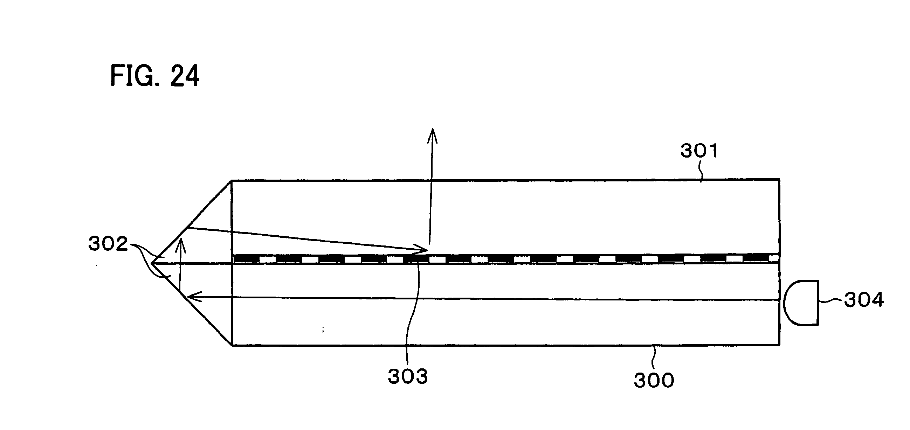

As shown in Figs. 23 and 24, in a first conventional art, the process of producing planar light source and the process of mixing colors are carried out by separate light guide plates 301 and 300. LEDs 304 of R, G, and B are used as the light source. Light having been emitted from the LEDs 304 first enters into the light guide plate 300 used for color mixing, and three primary colors of R, G, and B are mixed while the light is being guided. As a result, the light becomes substantially white. Next, the light is turned back by a prism 302, and enters into the light guide plate 301 used for planar light source producing. This light guide plate 301 used for the planar light source producing is normally made with a process of applying reflection dots 303 onto a back surface of an acrylic flat plate. The light is guided by internal reflection in the light guide plate 301 used for the planar light source producing, until the light reaches the reflection dots 303. By controlling a distribution of the reflection dots 303, it becomes possible to easily adjust surface luminance uniformly (see Non-Patent Document: Program Book of Color Forum JAPAN 2002 hosted by KOUGAKUSHIGAKKAI, page 95).

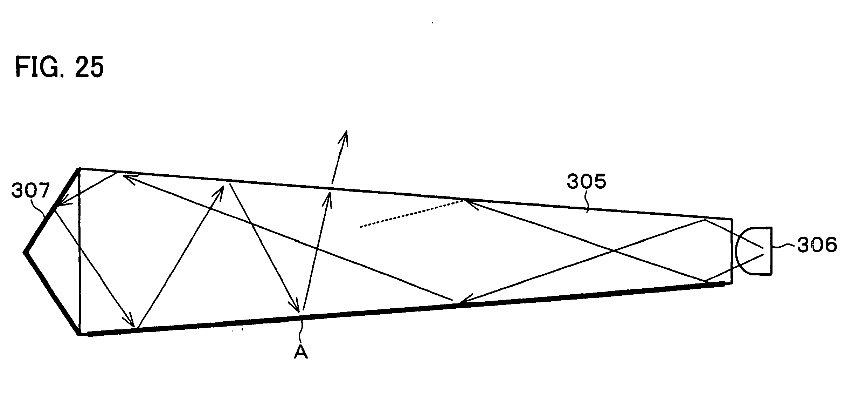

Next, as shown in Fig. 25, in a second conventional art, the process of producing planar light source and the process of mixing colors are carried out by a single light guide plate 305. A light incident side of the light guide plate 305 is thin while the opposite side is thick and shapes a wedge. An LED 306 of R, G, and B is used as the light source. The light enters into the light guide plate 305, and proceeds by total reflection. As the light of RGB is proceeding toward the other side in the light guide plate, the colors are mixed. An oblique reflection surface 307 is provided on an end surface of the light guide plate 305, opposite to another end surface close to the LED 306. The oblique reflection surface 307 changes the angle of light. Then, while the light having been reflected by the reflection surface 307 is proceeding towards the light source, its incident angle with respect to an inner surface of the light guide plate 305 becomes larger. When the incident angle becomes larger than a critical angle at a position A, the light is emitted from the light guide plate 305. A reflection plate is provided at a surface (back surface) of the light guide plate 305, opposite to the light emitting surface, and an airspace is provided between the back surface and the reflection plate. Therefore, the surface luminance is adjusted by a shape of the reflection surface 307 (see Non-Patent Document 2: Gerard Harvers lumileds [online], searched on December 18, 2002, the Internet <URL: http: / /www.lumileds.com/pdfs/techpaperspres/ SID-BA.pdf >, page 21).

However, these conventional configurations have the following problems.

In the case of the light guide plate described as the first conventional art, the planar light source producing and the color mixing are carried out by separate light guide plates. Thus, each light guide plate has to have an enough thickness for producing the planar light source or mixing the colors, so that the thickness and weight of the resulting light guide plate are doubled. Moreover, light conductivity may be reduced by light loss in the light guide plate connection section, which connects the light guide plate used for the planar light source producing and the light guide plate used for the color mixing.

Moreover, in the case of the light guide plate described as the second conventional art, the designing of the light guide plate (for example, reflection surface) is extremely difficult if attempting to achieve an uniform surface luminance. For example, a light guide plate of a 20-inch liquid crystal display with a screen length of 300 nm has a thickness of only a few millimeters. With such a thin plate, the entire luminance distribution needs to be controlled in a narrow region. In this view, practical use of the second art is not likely. Further, even a slight change of light distribution due to variations of components and ununiform assembling may change surface luminance distribution. Therefore, mass production of the light guide plates is difficult if the same quality is required.

Japanese laid open publication number 2002-071965 describes a light guide plate with a light diffusing layer, having fine ruggedness on the surface, stuck via a sticking layer, whose refractive index is lower than that of the light guide plate, to the rear surface of the guide plate. Light is emitted via light emitting means formed on the upper surface of the guide plate.

### DISCLOSURE OF INVENTION

In order to solve the above problems, an object of the present invention is to provide a light guide plate capable of converting a point light source and/or a liner light source into a planar light source, which light guide plate is made with a smaller thickness than the conventional plate, and allows easy mass production. The light guide plate of the present invention with such advantages is constituted by stacking a plurality of light guide layers whose refractive indices are different from each other.

In order to achieve the above object, a light guide plate of the present invention includes: a first light guide layer on which light from a light source is incident, made of a material having a refractive index n1; and a scattering light guide layer for emitting light as scattering light, the first light guide layer and the scattering light guide layer being stacked on each other, wherein: the scattering light guide layer includes (i) a second light guide layer made of a material having a refractive index n2 lower than the refractive index n1, adjacent to the first light guide layer, and (ii) a scattering layer for scattering light propagating to the second light guide layer; the first light guide layer includes, on an end surface opposite to a light guide surface on which the light is incident, reflection means which changes an angle of light propagating in the first light guide layer and reaching the end surface, so that the light is incident on the scattering light guide layer, and the first light guide layer causes total reflection of light, incident on the first light guide layer from the light source, at (i) a surface on which the scattering light guide layer is formed and (ii) a rear surface.

Preferred features of this aspect of the invention are set out in the dependent claims.

In the above arrangement, the first light guide layer and the scattering light guide layer are stacked with each other. Substantially all the light beams having been incident on the light guide surface of the first light guide layer proceeds forthright, while repeating the total reflection, in the first light guide layer until the light reaches the reflection means. Then, the light is reflected by the reflection means. The light having been reflected is incident on the scattering light guide layer. More specifically, the light having been reflected by the reflection means is incident on the second light guide layer, and then the light is incident on the scattering layer. The light having been incident on the scattering light guide layer (scattering layer) is emitted as the scattering light. In this case, the second light guide layer only has to guide the light to the scattering layer, therefore, the second light guide layer can be very thin. Therefore, for example, the thickness of the light guide plate can be reduced as compared with the conventional arrangement in which the color mixing and the planar light source producing are carried out by two separate light guide plates. Moreover, unlike the conventional arrangement in which the color mixing and the planar light source producing are carried out by one light guide plate, for example, it is not necessary to finely design the shape of the light guide plate. Therefore, the light guide plate can be manufactured easily as compared with the conventional art, so that it is possible to mass produce the light guide plates. Note that, the light propagation direction in the first light guide layer here denotes not a direction of local light propagation but the light propagation in the entire first light guide layer. That is, the direction of light propagating in the first light guide layer denotes the way from the light guide surface to the reflection means.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 is a side view showing a schematic arrangement of a light guide plate and a lighting apparatus in one embodiment of the present invention.
Fig. 2 is a perspective view showing a schematic arrangement of the light guide plate and the lighting apparatus.
Fig. 3 is a graph showing distribution of light of an LED.
Figs. 4(a) and 4(b) are graphs showing distribution of light of an LED, the light having passed through an optical element. Fig. 4(a) shows light distribution in a direction horizontal to a light guide surface. Fig. 4(b) shows the light distribution in a direction perpendicular to the light guide surface.
Figs. 5(a) to 5(c) are graphs showing distribution of light having been incident on the light guide body. Fig. 5(a) shows distribution of light having passed through a cylindrical lens. Fig. 5(b) shows distribution of light having been incident on the light guide surface. Fig. 5(c) shows distribution of light having been reflected by a reflection means.

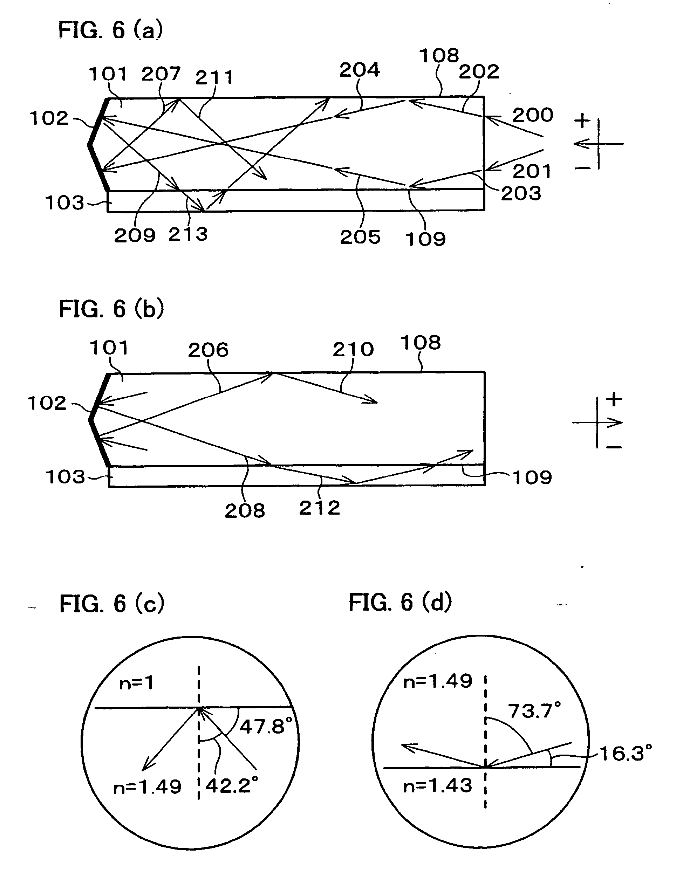

Figs. 6(a) to 6(d) are side views showing distribution of light having been incident on the light guide plate. Fig. 6(a) shows propagation of light having been incident on the light guide surface. Fig. 6(b) shows propagation of light having been reflected by the reflection means. Fig. 6(c) illustrates a substantial part of light guide plate, showing an angle of light that underwent total reflection at an interface of a first light guide layer and outside. Fig. 6(d) illustrates a substantial part of the light guide plate, showing an angle of light that underwent total reflection at an interface of the first light guide layer and a second light guide layer.
Fig. 7 is a side view showing a schematic arrangement of a light guide plate and a lighting apparatus in another embodiment of the present invention.
Fig. 8 is a side view showing a schematic arrangement of a light guide plate and a lighting apparatus in still another embodiment of the present invention.
Fig. 9 is a side view showing a schematic arrangement of a light guide plate and a lighting apparatus in still another embodiment of the present invention.
Fig. 10 a side view showing a schematic arrangement of a display apparatus in still another embodiment of the present invention.
Fig. 11 is a side view showing a schematic arrangement of a conventional display apparatus.
Fig. 12 is a side view showing a schematic arrangement of a light guide plate and a lighting apparatus in still another embodiment of the present invention.
Figs. 13 (a) and 13(b) are side views showing a schematic arrangement of the light guide body. Fig. 13(a) shows an arrangement in which the reflection means is curved. Fig. 13(b) shows an arrangement in which the reflection means is projected in a direction of the light guide surface.
Figs. 14(a) and 14(b) are side views showing a schematic arrangement of a lighting apparatus in still another embodiment of the present invention. Fig. 14(a) shows an arrangement in which a convex lens is provided near a light source. Fig. 14(b) shows an arrangement in which an optical focusing element is incorporated in the LED.
Figs. 15(a) to 15(c) are side views showing a schematic arrangement of the light guide body in still another embodiment of the present invention. Fig. 15(a) shows an arrangement in which the reflection means is provided outside the scattering dots. Fig. 15(b) shows an arrangement in which the reflection dots are formed between the second light guide layer and a third light guide layer. Fig. 15(c) shows an arrangement in which light spreading agents are dispersed in the second light guide layer.
Fig. 16 is a side view showing a schematic arrangement of a light guide plate and a lighting apparatus in still another embodiment of the present invention.
Fig. 17 is a side view showing a schematic arrangement of a light guide plate and a lighting apparatus in still another embodiment of the present invention.
Fig. 18 is a side view showing a schematic arrangement of a light guide plate and a lighting apparatus in still another embodiment of the present invention.
Fig. 19 is a side view showing a schematic arrangement of a light guide plate and a lighting apparatus in still another embodiment of the present invention.
Figs. 20(a) to 20(c) are side views showing a schematic arrangement of a lighting apparatus in still another embodiment of the present invention. Fig. 20(a) shows an arrangement in which a prism is provided near the light source. Fig. 20(b) shows an arrangement in which a curved mirror is provided near the light source. Fig. 20(c) shows an arrangement in which the light guide surface of the first light guide layer is inclined.
Fig. 21 is a side view showing a schematic arrangement of a lighting apparatus in still another embodiment of the present invention.

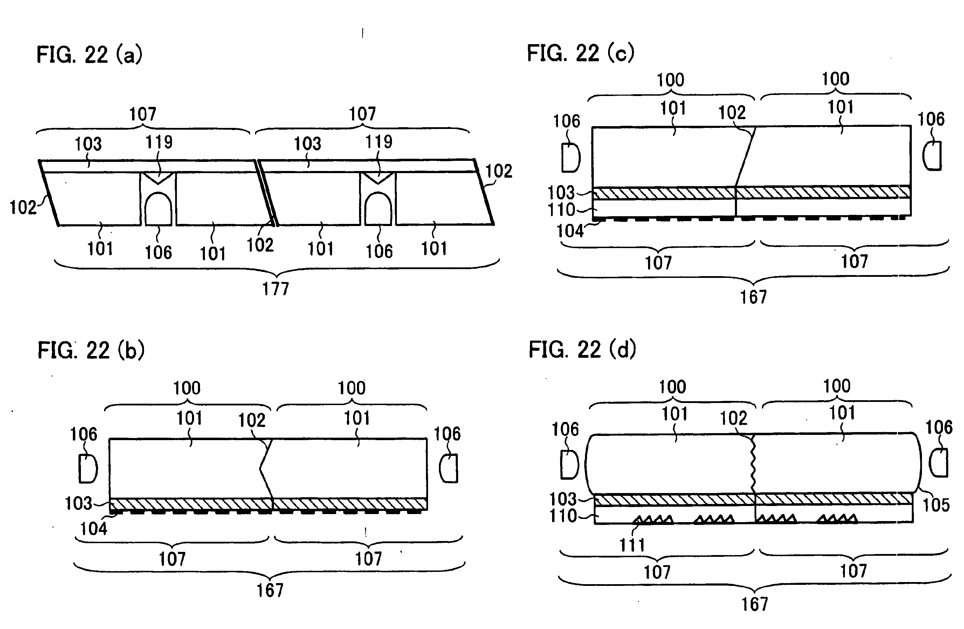

Figs. 22(a) to 22(d) are side views showing a schematic arrangement of a flat light source apparatus of the present invention. Fig. 22(a) shows an arrangement in which two lighting apparatuses are placed side by side, each of which has a reflection section on each end surface. Fig. 22(b) shows an arrangement in which two lighting apparatuses are placed side by side, each of which has an elbowed reflection section. Fig. 22(c) shows an arrangement in which two lighting apparatuses are placed side by side, each of which has an inclined reflection section. Fig. 22(d) shows an arrangement in which two lighting apparatuses are placed side by side, each of which has a sawtooth reflection section.
Fig. 23 is a perspective view showing a schematic arrangement of a conventional light guide plate and lighting apparatus.
Fig. 24 is a side view showing a schematic arrangement of the conventional light guide plate and lighting apparatus.
Fig. 25 is a side view showing a schematic arrangement of a conventional light guide plate and lighting apparatus.

### BEST MODE FOR CARRYING OUT THE INVENTION

The following further explains the present invention with some Embodiments and Comparative Examples, however the present invention is not limited to those.

### (Embodiment 1)

The following explains Embodiment 1 of the present invention in reference to the figures. A light guide plate of the present embodiment includes (i) the first light guide layer made of a material having a refractive index n1, the first light guide layer receiving light from a light source which is distributed in a certain range of angles with respect to the light guide plate, and (ii) a scattering light guide layer which emits, as scattering light, the light having been incident on the first light guide layer. The first light guide layer and the scattering light guide layer are stacked perpendicularly to the direction of light propagation in a first light guide layer. Moreover, the light guide plate of the present embodiment is so structured that (i) the scattering light guide layer includes at least (a) a second light guide layer adjacent to the first light guide layer and made of a material having a refractive index n2 lower than the refractive index n1 and (b) a scattering layer for scattering the light propagating in the second light guide layer, and (ii) a reflection means is provided on a surface of the first light guide layer, the surface opposite to the light guide surface on which the light is incident, the reflection means serving to irradiate the scattering light guide layer with the light having propagated in the first light guide layer. Note that, the light propagation direction in the first light guide layer here denotes not a direction of local light propagation but the light propagation in the entire first light guide layer. That is, the direction of light propagating in the first light guide layer denotes the way from the light guide surface to the reflection means. In other words, the light is incident in a direction orthogonal to the direction toward which the first light guide layer and the second light guide layer are stacked. Moreover, the light distributed in the certain range of angles denotes light irradiation in which light incident on the light guide surface propagates to the reflection means in the first light guide layer while repeating total reflection, and the light having been reflected by the reflection means is incident on the second light guide layer. Note that, the light guide surface is a surface for receiving light from, for example, a light source provided outside the first light guide layer.

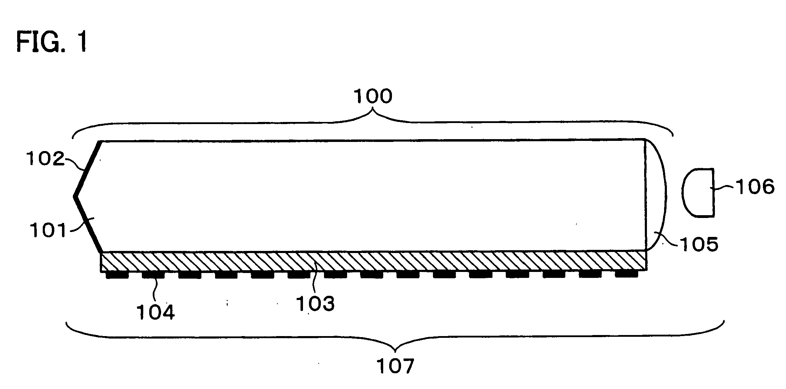

Fig. 1 is a side view showing a schematic arrangement of a lighting apparatus 107 equipped with a light guide plate 100 of the present embodiment. The light guide plate 100 of the present embodiment includes, as basic members, a first light guide body (first light guide layer) 101, a reflection section (reflection means) 102, a second light guide body (second light guide layer) 103, and reflection dots (scattering layers) 104. The second light guide body 103 and the reflection dots 104 constitute a scattering light guide layer.

The first light guide body 101 is formed by a material having a refractive index n1. The second light guide body 103 is formed by a material having a refractive index n2 lower than the refractive index n1. In the present embodiment, the first light guide body 101 is realized by a 6mm thick acrylic plate (SUMIPEX, produced by Sumitomo Chemical Co., Ltd.) whose refractive index n1 is set to 1.49.

Moreover, the second light guide body 103 is realized by an optical waveguide forming resin (produced by NTT-AT) having a refractive index of 1.43 lower than that of the first light guide body 101. The optical waveguide forming resin is an ultraviolet curing resin whose viscosity and refractive index can be adjusted to desired values. Fabrication of the second light guide body 103 may be performed, for example, through a method taking the steps of: dropping the optical waveguide forming resin on the first light guide body 101; and uniformizing its thickness by spin coating. The thickness of the second light guide body 103 is not especially limited as long as it ensures guiding of the light having been reflected by the reflection section 102 to the reflection dots 104. In the present embodiment, the thickness of the second light guide body 103 is adjusted to substantially 0.5 mm by adjusting (i) viscosity of the material constituting the second light guide body 103 and (ii) the rotation rate of spin coating. By exposing the optical waveguide forming resin to ultraviolet light, having a peak at 385 nm, at an intensity of 10 mW/cm² for 10 minutes, the second light guide body 103 can be formed with a desired refractive index. Note that, fabrication of the second light guide body 103 is not limited to this method. Each of the first light guide body 101 and the second light guide body 103 is tabular and has a uniform thickness.

The light guide plate 100 of the present embodiment is so structured that (i) the first light guide body 101 and the second light guide body 103 are optically connected with each other and (ii) the reflection dots 104 for scattering light are provided on a surface of the second light guide body 103, the surface opposite to the surface in contact with the first light guide body 101. Moreover, the elbowed reflection section 102 is provided on a side surface (end surface) of the first light guide body 101, and appears to be inclined when viewed from a cross section (side surface) of the light guide plate 100. This side surface is one orthogonal to the surface of the first light guide body 101 in contact with the second light guide body 103. The light guide plate 100 thus arranged, a cylindrical lens 105 (light focusing optical element), and a light source unit 106 which is an LED (Light Emitting Diode) constitute the lighting apparatus 107 of the present embodiment. Moreover, the light source unit 106 and the cylindrical lens 105 are provided on a side of a surface of the first light guide body 101, the surface opposite to the surface on which the reflection section 102 is provided. Note that, in the present embodiment, the light source unit 106 and the cylindrical lens 105 which is the light focusing optical element constitute a light source.

Note that, in Fig. 1, relative sizes of the components are exaggerated for better understanding, those are not the actual sizes.

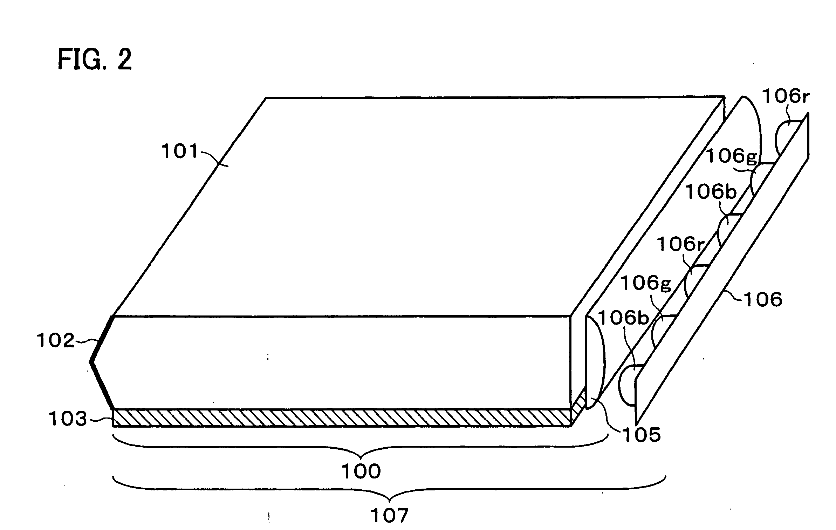

Fig. 2 is a perspective view of the lighting apparatus 107 shown in Fig. 1. The light source unit 106 is constituted of a plurality of LEDs. In the present embodiment, as shown in Fig. 1, the light source unit 106 in the lighting apparatus 107 includes three types of LEDs, that is, red LEDs 106r, green LEDs 106g, and blue LEDs 106b. Moreover, for ease of explanation, the reflection dots 104 are not shown in Fig.2.

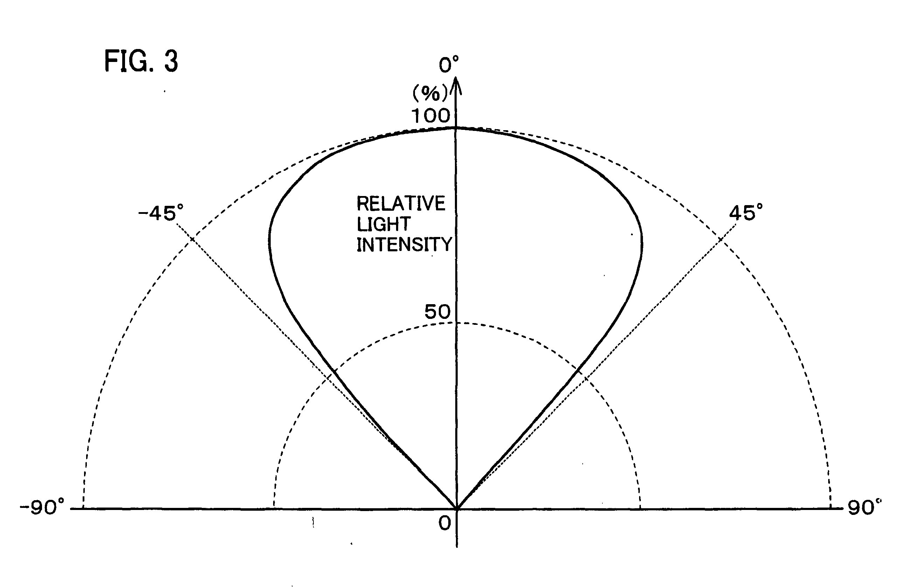

Light emitted from the light source unit 106 has, for example, light distribution shown in Fig. 3. The light distribution, which denotes traveling direction and intensity of light, is shown by a polar coordinate. A distance from an original point 0 indicates the intensity of light, and the inclination indicates an angle with respect to a direction of a center of an LED. In the present embodiment, the light having emitted from one LED distributes in a range of substantially ±45 degrees with respect to the direction of the center of the LED. Moreover, the intensity of this light distribution is substantially the same in all directions. In the following explanation, a distribution of light in a specific range is regarded as a light distribution angle (irradiation angle).

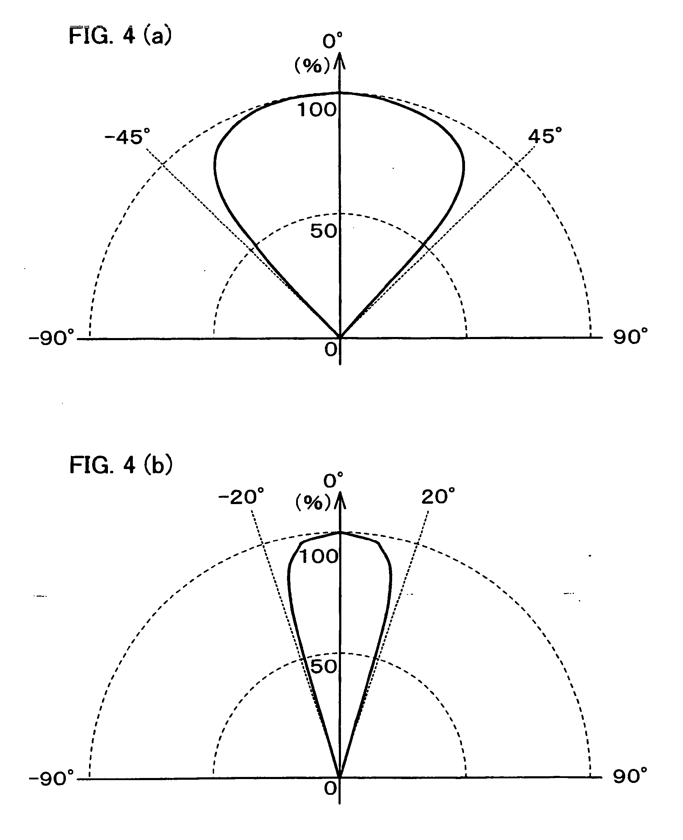

Fig. 4 shows a distribution of the light having been emitted from the light source unit 106 and passed through the cylindrical lens 105. Since the effect of lens cannot be obtained in a direction of long side of the cylindrical lens 105 shown in Fig. 2, in other words, in a direction in which the cylindrical lens 105 extends (hereinafter referred to as "direction horizontal to the light guide surface"), the light distribution shown in Fig. 4(a) is substantially the same as that shown in Fig. 3. On the other hand, since the effect of lens can be obtained in the direction along the short side, which is orthogonal to the long side of the cylindrical lens 105, in other words, in the direction towards the reflection section 102 from the cylindrical lens 105, in still other words, in the direction of the way connecting the light guide surface and the reflection section 102 (hereinafter referred to as "direction perpendicular to the light guide surface"), the light distribution is changed as shown in Fig. 4(b). In this case, the light distributes in a narrower range of angles than that of the light emitted from the light source unit 106. In the present embodiment, in the direction of the way connecting the light guide surface and the reflection section 102, the light distributes in a range of substantially ±20 degrees with respect to the direction of the center of the LED. More specifically, the cylindrical lens 105 is so designed that the light distribution angle is in a range of ±20 degrees. The LED is not a point light source technically, as it emits light from a chip having a certain square measure; therefore there generally are some difficulties in producing completely parallel light from LEDs. Moreover, there are variations depending on the type of light source or lot-to-lot variations, which makes it difficult to completely control the distribution of light. However, as described in the present embodiment, it is easy to adjust the light distribution angle within a relatively wide range of angles, for example, about ±20 degrees. Moreover, with regard to the distribution of light having passed through the cylindrical lens 105, comparatively free control is possible by changing a focus position of the cylindrical lens 105. Moreover, the cylindrical lens 105 may instead be the light focusing optical element having the same effect, such as a convex lens with a light-focusing effect and high light transmittance. However, if attempting to focus all of light rays having been emitted from the LED regardless to different directions, it is necessary to provide an enough distance for mixing the light emitted from the LED. Therefore, if it is more desirable to mix the light within a short distance, an anisotropic lens, such as the cylindrical lens, should be used. Necessity of the light focusing optical element, such as the cylindrical lens, depends on the type of the light source. It is not necessary to provide the light focusing optical element in the case where the original light source has a function of focusing light, in other words, the light source is comparatively close to the parallel light.

Moreover, an antireflection treatment is carried out to the surface of the cylindrical lens 105 used in the present embodiment. Such treatment to the optical lens further improves the transmittance of light.

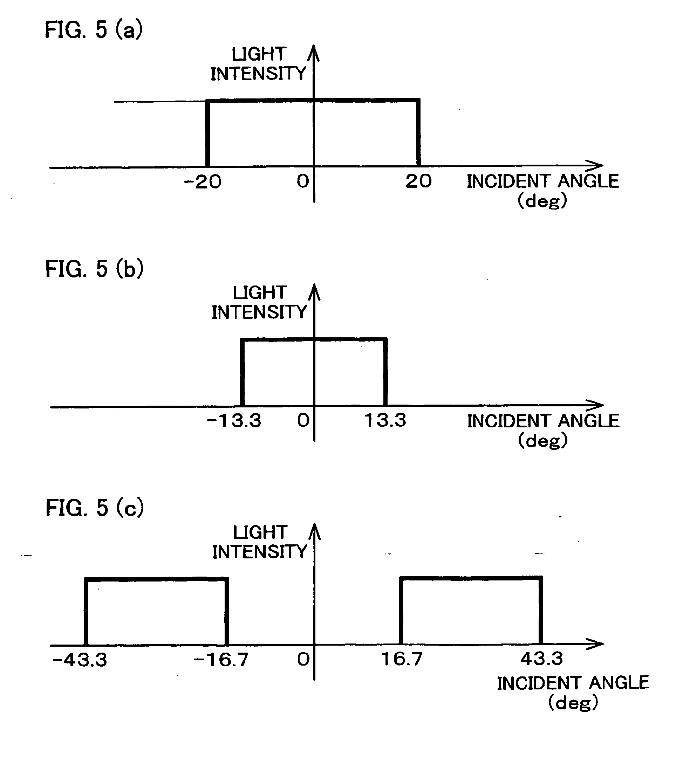

The light whose distribution has been controlled by the cylindrical lens 105 is incident on the first light guide body 101. The distribution of the light in this case is shown in Figs. 5 by using an orthogonal coordinate. A horizontal axis of the light distribution schematically shows an angle in a direction perpendicular to the light guide surface, and a vertical axis schematically shows an intensity of light. Note that, in the following explanation, an intensity distribution of the light distributed in the certain range of angles is not especially limited. For convenience, an intensity of the light of the vertical axis is constant regardless of the intensity.

Fig. 5(a) shows the light distributed in the light distribution angle of ±20 degree as focused by the cylindrical lens 105. The light distribution of the present embodiment is shown in Figs 5(a) and 5(b), and Fig. 6(a) schematically shows the angular relation of these lights 200 and 201. Note that, in the following explanation of Figs. 6, the incident axis of light is defined as 0 degrees, the angle of the light inclined to the second light guide body 103 when viewed from the axis is defined as a minus angle, and the angle of the light oppositely inclined is defined as a plus angle. This remains unchanged regardless of the traveling direction (outward or homeward) of light. Note that, the incident axis of light faces to a direction perpendicular to the light guide surface of the present embodiment, that is, to a direction parallel to the stacking surface of the light guide body. Note that, the stacking surface and the light guide surface are orthogonal to each other in the present embodiment.

When the light having been focused by the cylindrical lens 105 in the light distribution range of ±20 degrees is incident on the first light guide body 101, the light distributes in a light distribution angle of substantially ±13.3 degrees. More specifically, the light having been incident on the first light guide body 101 distributes in a range from substantially -13.3 degrees to substantially +13.3 degrees when viewed from the light guide surface. A phenomenon of changing the light distribution angle is caused by an effect of light refraction, which occurred when the light is incident from the air having the refractive index of substantially 1 on the first light guide body 101 having the refractive index of 1.49. The light is shown by arrows of lights 202 and 203 in Fig. 6(a).

As shown in Figs. 6(a) and 6(b), the first light guide body 101 has two interfaces: an interface 108, the interface of the air, and an interface 109, the interface of the second light guide body 103. According to the condition of total reflection, incident light undergoes the total reflection at the interface of the first light guide body 101, having the refractive index n 1 of 1.49, and the air (refractive index; substantially 1), when the incident angle with respect to the normal line of the interface is larger than substantially 42.2 degrees. That is, the light having been incident on the interface in a range of ±47.8 degrees undergoes the total reflection (see Fig. 6(c)). As shown in Fig. 5(b), the light having been incident on the first light guide body 101 is distributed in a range of light distribution angles substantially ±13.3 degrees. Because this satisfies the condition of the total reflection, the light is not emitted to the air. The light is shown by light 204 in Fig. 6(a). That is, in the present embodiment, the light incident on the first light guide body 101 has a specific light distribution angle so that the light undergoes the total reflection as it is incident onto the interface 109 of the first light guide body 101 and the second light guide body 103.

Moreover, the condition of the total reflection at the interface 109 of the second light guide body 103 is determined by the refractive indices of two light guide bodies. The incident light undergoes the total reflection when the angle with respect to the normal line of the interface is larger than substantially 73.7 degrees. That is, the light incident on the interface in a range of substantially ±16.3 degrees undergoes the total reflection (see Fig. 6(d)). As described above, the light being incident on the first light guide body 101 is distributed in a range of light distribution angles substantially ±13.3 degrees as shown in Fig. 5(b). As in the interface 108 of the air, the light satisfies the condition of the total reflection. Therefore, the light propagating in the first light guide body 101 is not emitted to the second light guide body 103 at the interface 109 of the second light guide body 103. This light is shown by light 205 in Fig. 6(a). That is, in the present embodiment, in addition to the above condition, the light incident on the first light guide body 101 has a specific light distribution angle so that (i) the light is not directly emitted from the interface 108 of the first light guide body 191, in other words, (ii) the light incident on the interface 108 of the first light guide body 101 and the outside undergoes the total reflection.

That is, all the light beams emitted from the light source and propagating in the first light guide body 101 proceeds, while repeating the total reflection, to a surface opposite to the light guide surface, the surface on which the reflection section 102 is provided.

The reflection section 102 can be created by, for example, (i) cutting a side surface of the first light guide body 101 in the shape of mountain by using a laser cutter, (ii) polishing the side surface having being cut, and (iii) forming an aluminum film on the side surface. Instead of the aluminum film, any material having light reflection property can be used. However, because efficiency of light utilization is greatly affected by the light reflectance of the reflection surface, it is desirable to choose a reflection film having as high reflectance as possible. The reflection section 102 may be provided via an air layer, this arrangement is however not desirable as it causes the light loss because of interface reflection with the air. On this account, in order to improve the efficiency of light utilization, it is most effective to form a dielectric multilayer film on the side surface of the first light guide body 101.

In the present embodiment, an oblique angle of the reflection section 102 is set to substantially 15 degrees. In other words, as shown in Fig. 1, the reflection section 102 is so formed as to be inclined at substantially 15 degrees with respect to the light guide surface of the first light guide body 101. More specifically, the reflection section 102 used in the present embodiment is so formed as to be substantially elbowed when viewed from the surface (hereinafter referred to as cross-sectional surface) perpendicular to the long side where the plurality of LEDs are provided. Moreover, the reflection section 102 appears to be the shape of depression when viewed from a direction of light illumination. That is, the cross-sectional surface is parallel to the stacking direction of the first light guide body 101 and the second light guide body 103, and is perpendicular to the light guide surface.

Because the reflection section 102 is so placed as to be inclined at 15 degrees with respect to the light guide surface, the light having been incident on the reflection section 102 changes its angle by 30 degrees by reflection. As a result, as shown in Fig. 5(c), the light having been reflected by the reflection section 102 distributes (i) in a range from substantially 16.7 degrees to substantially 43.3 degrees with respect the light guide surface and (ii) in a range from substantially -16.7 degrees to substantially -43.3 degrees with respect the light guide surface. Figs. 6(a) and 6(b) show four typical angles of light: substantially 16.7 degrees; substantially 43.3 degrees; substantially -16.7 degrees; and substantially -43.3 degrees. The light of substantially 16.7 degrees is shown by light 206 in Fig. 6(b), the light of substantially 43.3 degrees is shown by light 207 in Fig. 6(a), the light of substantially -16.7 degrees is shown by light 208 in Fig. 6(b), and the light of substantially -43.3 degrees is shown by light 209 in Fig. 6(a).

Then, the light having been reflected by the reflection section 102 proceeds to the light guide surface, and is incident on the interfaces 108 and 109. Here, according to the above-described condition of the total reflection, the light having been incident on the interface 108 in a range of substantially ±47.8 degrees undergoes the total reflection at the interface 108 of the air (outside). Therefore, because the light distribution angle of the light having been reflected by the reflection section 102 falls (i) in a range from substantially 16.7 degrees to substantially 43.3 degrees or (ii) in a range from substantially -16.7 degrees to substantially -43.3 degrees, the light having been reflected undergoes the total reflection. This is shown by light 210 in Fig. 6(b) and light 211 in Fig. 6(a).

Meanwhile, according to the condition of the total reflection, the light having been incident on the interface 109 of the second light guide body 103 in a range of substantially ±16.1 degrees with respect to the interface 109 undergoes the total reflection at the interface 109. However, because the light distribution angle of the light having been reflected by the reflection section 102 falls (i) in a range from substantially 16.7 degrees to substantially 43.3 degrees or (ii) in a range from substantially -16.7 degrees to substantially -43.3 degrees, this light does not undergo the total reflection but enters into the second light guide body 103. Here, for example, the lights having the light distribution angles of substantially -16.7 degrees and substantially -43.3 degrees are changed by the effect of refraction into the lights having the light distribution angles of substantially -3.6 degrees and substantially -40.7 degrees, respectively. These lights are shown by light 212 in Fig. 6(b) and light 213 in Fig. 6(a). That is, the light distribution angle of the light having been reflected by the reflection section 102 and incident on the second light guide body 103 falls in a range from substantially -3.6 degrees to substantially -40.7 degrees.

According to the condition of the total reflection, the light having an angle larger than substantially 44.4 degrees with respect to the normal line of an interface of the second light guide body 103 and the air (outside) undergoes the total reflection at the interface. That is, total reflection occurs if the light has an angle in a range from larger than 0 degrees to substantially ±45.6 degrees with respect to the interface. Because the light propagating (proceeding) in the second light guide body 103 has the light distribution angle in a range from substantially -3.6 degrees to substantially -43.3 degrees, the light undergoes the total reflection at the interface of the second light guide body and the outside before returning to the first light guide body 101. Then, the light having undergone the total reflection at the interface, that is, the light having been returned to the first light guide body 101 refracts again, and results in the light having the light distribution angle in a range from substantially 16.7 degrees to substantially 43.3 degrees, as shown by the light 206 in Fig. 6(b) and the light 207 in Fig. 6(a).

Note that, in the above explanation, (i) the interface 108 of the first light guide body 101 and the outside, (ii) the interface 109 of the first light guide body 101 and the second light guide body 103, and (iii) the interface of the second light guide body 103 and the outside are parallel to each other and are orthogonal to the light guide surface.

To sum up, in the present embodiment, the light having been incident on the first light guide body 101 in the range of angles ±20 degrees repeats the total reflection in the first light guide body 101 as it proceeds to the reflection section 102. Then, the light is reflected by the reflection section 102 where its angle is changed. The reflection light of the reflection section 102 undergoes the total reflection at the interface 108 of the first light guide body 101 and the outside, but is refracted by the interface 109 of the first light guide body 101 and the second light guide body 103 and is incident on the second light guide body 103. Moreover, the light having been incident on the second light guide body 103 undergoes the total reflection at the interface of the second light guide body 103 and the outside. That is, the reflection light of the reflection section 102 repeats the total reflection between (i) the interface 108 of the first light guide body 101 and the outside and (ii) the interface of the second light guide body 103 and the outside.

Incidentally, in the present embodiment, as shown in Fig. 1, the reflection dots 104 are formed on a surface of the second light guide body 103, that is, on the interface of the second light guide body 103 and the outside. Therefore, the light having been refracted by the interface 109 and incident on the second light guide body 103 is incident on the reflection dots 104. Then, the light having been incident on the reflection dots 104 is scattered/reflected by the reflection dots 104. At this point, the traveling way of the light is directed perpendicular to the interface of the second light guide body 103 and the outside in a direction of the first light guide body 101 when viewed from the second light guide body 103. That is, the light is emitted outward at the interface 108 of the first light guide body 101 and the air.

Note that, light not having been incident on the reflection dots 104, that is, the light not having scattered/reflected keeps on traveling by the total reflection, but a part thereof is incident on other reflection dots 104 and the same results are repeated. Before the light eventually returns to the end surface (light guide surface) of the light incident side, substantially all the light beams having been incident on the light guide surface of the first light guide body 101 is emitted from the light guide plate 100. On this account, by appropriately designing the disposition of the reflection dots 104, it becomes possible to obtain the light guide plate 100 and the lighting apparatus 107, both of which realize the high efficiency of light utilization. Needless to say, it is easy to form a uniform light emitting surface by appropriately designing the reflection dots 104. Optimization of the reflection dots 104 is achieved in many of existing products.

In some cases, the scattering by the reflection dots 104 may generate stray light, which is emitted from the second light guide surface 103 to the air, that is, toward the direction opposite to the direction toward which most light is emitted. In this case, efficiency of light emission can be further improved by, for example, providing a reflection plate (not shown) outside the second light guide body 103, that is, providing the reflection plate on the side which is opposite, when viewed from the reflection dots 104, to the side where the second light guide body 103 is formed.

As described, in the above arrangement, a part of the incident light on the second light guide surface 103 is scattered/reflected by the reflection dots 104. Moreover, the light having been incident on the light guide surface of the first light guide body 101 repeats the total reflection in the first light guide body 101 until the light reaches the reflection section 102, and therefore the light is not incident on the reflection dots 104. At this time, the colors of LEDs are mixed. Here, the light is not emitted to the outside from the first light guide body 101, and therefore is invisible. Further, color unevenness and luminance nonuniformity are substantially disappeared before the light reaches the reflection section 102. When this light is emitted outside the light guide plate 100 by the reflection dots 104, the light becomes visible for the first time. On this account, a planar light source with almost no visible luminance nonuniformity or color unevenness is obtained.

Although the lighting apparatus 107 arranged as above uses LEDs which are red, green, and blue point light sources, the lighting apparatus 107 serves as an even planar light source in which the colors are completely mixed, and no color unevenness or luminance nonuniformity of the LEDs is seen.

Moreover, when the lighting apparatus 107 of the present embodiment is applied to, for example, an illumination table lamp, it is possible to obtain uniform emission of white light. This illumination table lamp is also capable of producing any desired white light by individually changing light quantity of red, blue, and green LEDs, without causing luminance nonuniformity or color unevenness. In addition to the application to the illumination table lamp, the lighting apparatus 107 may be applied for, for example, an illumination lamp attached to a ceiling or a wall. Moreover, the lighting apparatus 107 of the present embodiment can emit light of other colors than white by changing settings of the light source unit 106 which is the point light source. Therefore, the lighting apparatus 107 is suitable not only for an illumination lamp with improved brightness but also for the illumination lamp for creating a good atmosphere. More specifically, by changing the ratio of light sources (LEDs) of three primary colors: red, green, and blue of the light source unit 106, it becomes possible to emit light of various colors.

Moreover, in the light guide plate 100 of the present embodiment, the first light guide body 101 serves to both mix the colors and provide a practical planar light source, simultaneously.

With this structure, it becomes possible to reduce the thickness of the entire light guide plate as compared with an arrangement in which the color mixing and the planar light source producing are carried out by separate light guide plates.

In the light guide plate 100 of the present embodiment, the second light guide body 103 is only required to refract the light from the first light guide body 101; therefore, even when the thickness of the second light guide body 103 is significantly reduced, a planar light source can still be realized. On this account, it is possible to reduce the thickness of the entire light guide plate as compared with conventional arrangements.

Moreover, the first light guide body 101 is only required to have an uniform thickness, and therefore the structure of the light guide plate can be simplified compared to the conventional arrangement in which the color mixing and the planar light source producing are carried out by a single light guide plate. Moreover, since the arrangement of the light guide plate is further simplified in the present embodiment than the conventional ones, it becomes possible to mass produce the light guide plates without causing variation in planar luminance distribution.

Moreover, it is preferable that the light source of the present embodiment be either (i) the point light sources of a plurality of colors or (ii) the liner light sources of a plurality of colors. When the plurality of point light sources and/or liner light sources respectively emit different monochromatic lights, it becomes possible to obtain the planar light source with satisfactory color reproducibility.

In the light guide plate 100 of the present embodiment, the refractive indices of the first light guide body 101 and the second light guide body 103, the angle of the reflection section 102 with respect to the light guide surface, and the range of angles (light distribution angles) of incident light are specified so that (i) the light having been incident on the first light guide body 101 proceeds, while undergoing the total reflection, in the first light guide body 101 until the light is reflected by the reflection section 102, (ii) the light having been reflected by the reflection section 102 is refracted by the interface of the first light guide body 101 and the second light guide body 103 before being incident on the reflection dots 104, thereafter (iii) the light becomes the scattering light.

More specifically, (i) materials of the first light guide body 101 are chosen so that the refractive index n 1 becomes 1.49, and the refractive index n2 of the second light guide body 103 becomes 1.43, (ii) the reflection section 102 is so placed as to be inclined by 15 degrees with respect to the light guide surface, and (iii) the light is incident on the first light guide body 101 with a light distribution angle of ±13.3 degrees. With this arrangement, the light guide plate produces further uniform planar light source.

Moreover, fabrication of the light guide plate 100 is easy, as each of the first light guide body 101 and second light guide body 103 of the present embodiment has a uniform thickness and tabular.

### (Embodiment 2)

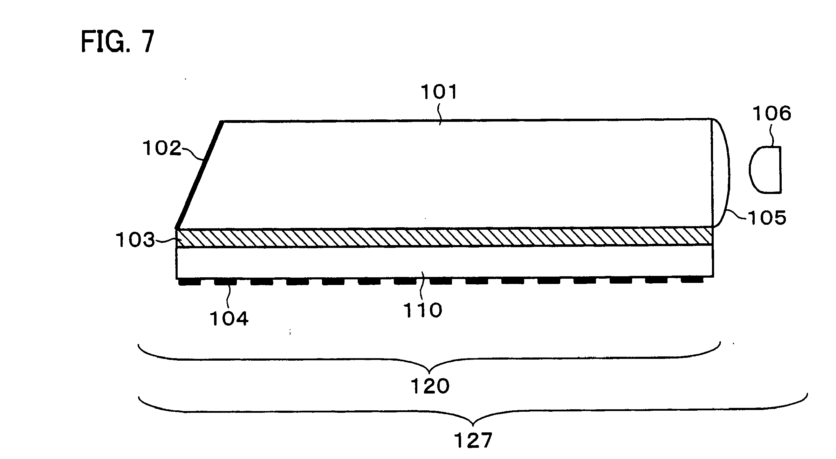

The following explains another embodiment of the present invention in reference to Fig. 7. Note that, for ease of explanation, the same reference numerals are used for the members having the same functions as the members used in Embodiment 1, and the explanations thereof are omitted.

Fig. 7 is a side view showing a schematic arrangement of a light guide body 120 and a lighting apparatus 127 of the present embodiment. In Embodiment 2, the light guide plate 120 includes, as basic members, the first light guide body 101 having the refractive index n 1, the second light guide body 103 having the refractive index n2 lower than the refractive index n1, a third light guide body 110 having a refractive index n3 higher than the refractive index n2, the reflection section 102, and the reflection dots 104. The second light guide body 103 is formed between the first light guide body 101 and the third light guide body 110, and those light guide bodies are optically connected with each other. Moreover, the reflection dots 104 are formed on a surface of the third light guide body 103, the surface opposite to a surface in contact with the second light guide body 103. Note that, in the present embodiment, the second light guide body 103, the third light guide body 110, and the reflection dots 104 constitute a spreading light guide layer. Further, the reflection section 102 is provided on one of the end surfaces of the first light guide body 101, and is inclined with respect to the light guide surface. More specifically, the reflection section 102 is provided on a surface (side) opposite to the light guide surface of the first light guide body 101.

In addition to the light guide plate 120 constituted of the basic members above, the lighting apparatus 127 further includes the cylindrical lens 105 which is the light focusing optical element, and the light source unit 106 which is the light source constitute. As with Embodiment 1, the light source unit 106 in Embodiment 2 is constituted of a plurality of LEDs.

Note that, in Fig. 7, relative sizes of the components are exaggerated for better understanding, those are not the actual sizes.

In Embodiment 2, the refractive index n1 of the first light guide body 101 is set to 1.49, the refractive index n2 of the second light guide body 103 is set to 1.43, and the refractive index n3 of the third light guide body 110 is set to 1.49 which is the same as the refractive index n1. More specifically, as in Embodiment 1, the first light guide body 101 is made of a 6mm thick acrylic plate. The third light guide body 110 is made of a 2mm thick acrylic plate, which is the same material as that of the first light guide body 101. The second light guide body 103 is made of an adhesive dedicatedly used for optical component assembly (produced by NTT-AT). The adhesive for optical component assembly, which is curable by being exposed to ultraviolet light, is applied into a space between the components to be bonded together. In Embodiment 2, the second light guide body 103 is formed in the following manner. First, the adhesive for optical component assembly is dropped onto the first light guide body 101, the third light guide body 110 is put on it, and pressure is given so that the adhesive for optical component assembly has a uniform thickness. Then, by exposing this assembly to ultraviolet light, having a peak at 385 nm, at an intensity of 10 mW/cm² for 15 minutes, the adhesive for optical component assembly is completely cured. In this way, the second light guide body 103 is formed. Here, the thickness of the second light guide body 103 is set to substantially 50 µm, but it can be arbitrarily changed within a range greater than the wavelength of visible light. However, excessive reduction in thickness of the second light guide body 103 may result in insufficient adhesive strength. Therefore, the second light guide body 103 needs to have a thickness of at least substantially several micrometers. Note that, because the second light guide body 103 is sandwiched between the first light guide body 101 and the third light guide body 110, it is possible to reduce the thickness as compared with the conventional ones, meaning that the second light guide body 103 can be formed with a small amount of adhesive for optical component assembly, thereby reducing cost.

In Embodiment 2, the basic operation theory is substantially identical to that of Embodiment 1; therefore, the following explanation is made only to clarify the difference therebetween. The light from the light source unit 106 is focused by the cylindrical lens 105 in a range of the light distribution angles substantially ±20 degrees. The light distribution angle is not especially limited, however a narrower range is more preferable. The light having been focused by the cylindrical lens 105 is incident on the light guide surface (surface opposite to the surface on which the reflection section 102 is formed) of the first light guide body 101, and repeats the total reflection by inner surfaces of the first light guide body 101 until it reaches the reflection section 102, thus ensuring the effect explained in Embodiment 1. As with Embodiment 1, the reflection section 102 is so provided as to have an oblique angle of 15 degrees with respect to the light guide surface. That is, the light having traveled in the first light guide body 101 changes its angle by 30 degrees as it reaches the reflection section 102 before proceeding to the second light guide body 103. Whereas the reflection section 102 is elbowed in Embodiment 1, the reflection section 102 in Embodiment 2 is inclined toward the second light guide body 103 when viewed from the cross-sectional surface. This arrangement is however optically the same as that in Embodiment 1, and is totally allowable. Moreover, in terms of assembly, the reflection section 102 in Embodiment 2 can be fabricated with less number of processing steps, particularly for cutting steps or disposing steps of the member for reflection, such as an aluminum film. Moreover, even when an inexpertly-designed reflection section 102 causes light leakage from the reflection surface, the defect would not be significant.

As one of the notable differences from Embodiment 1, Embodiment 2 further includes the third light guide body 110 outside the second light guide body 103, that is, on a surface of the second light guide body 103, the surface opposite to the surface on which the first light guide body 101 is provided. In contrast to Embodiment 1 in which the light having traveled in the second light guide body 103 undergoes the total reflection at the interface of the second light guide body 103 and the air, the present embodiment causes the light to refract again at the second light guide body 103, which is in contact with the third light guide body 110. Because the progress of light in the case above is the same as that of the light from the second light guide body 103 to the first light guide body 101, it can be easily estimated by analogy when the refractive indices of the first light guide body 101 and the third light guide body 110 are identical. That is, the total reflection does not occur in the light proceeds from the second light guide body 103 to the third light guide body 110, but the light undergoes the total reflection at an interface of the third light guide body 110 and the air as it is incident on the third light guide body 110. The principle of this reflection is the same as that for causing the light to undergo the total reflection at the interface of the first light guide body 101 and the air.

As described, the light having distributed in a range of the light distribution angles ±20 degrees and having been incident on the first light guide body 101 repeats the total reflection in the first light guide body 101 before reaching the reflection section 102, and changes its angle by the reflection section 102. Then, the light having been reflected by the reflection section 102 repeats the total reflection at the interface of the first light guide body 101 and the outside while being refracted by the interface of the first light guide body 101 and the second light guide body 103, and is incident on the second light guide body 103. The light having been incident on the second light guide body 103 is refracted by the interface of the second light guide body 103 and the third light guide body 110, and is incident on the third light guide body 110.

Then, the light having been incident on the third light guide body 110 is scattered/reflected by the reflection dots 104 provided on the third light guide body 110, while the part thereof passes through the second light guide body 103 and the first light guide body 101 before being emitted from the interface of the first light guide body 101 and the outside (air). By optimizing the placement of the reflection dots 104, it is possible to obtain the lighting apparatus which is a uniform planar light source. The reflection plate may be provided outside the third light guide body 110 in order to efficiently utilize the stray light.

In the present embodiment, the third light guide body 110 is further formed in addition to the arrangement of Embodiment 1. This arrangement has an advantage of being capable of further reducing the thickness of the second light guide body 103. In addition to this, the following advantages can be obtained.

In comparison of (i) the angle of light in Embodiment 1 having been incident on the second light guide body 103 on which the reflection dots 104 are provided and (ii) the angle of light in the present embodiment having been incident on the third light guide body 110 on which the reflection dots 104 are provided, with respect to the interface of the third light guide body 110 and the reflection dots 104, the angle of light in the present embodiment is closer to a right angle with respect to the interface of the reflection dots 104 than the angle of light in Embodiment 1. That is, the light of the present embodiment is incident on the reflection dots 104 at a steeper angle than that of the light of Embodiment 1. This is because, in the present embodiment, the third light guide body 110 in contact with the reflection dots 104 has the refractive index higher than that of the second light guide body 103. Generally, most of the light having been incident on the reflection dots 104 become regular reflection light, and the intensity of the light becomes a Gaussian distribution centering on the angle. On this account, the light having been incident on the reflection dots 104 (interface of the reflection dots 104 and the third light guide body 110 adjacent to the reflection dots 104) at an angle close to a right angle with respect to the reflection dots 104 can be emitted to the outside (air) from the light guide plate 100 more efficiently.

### (Embodiment 3)

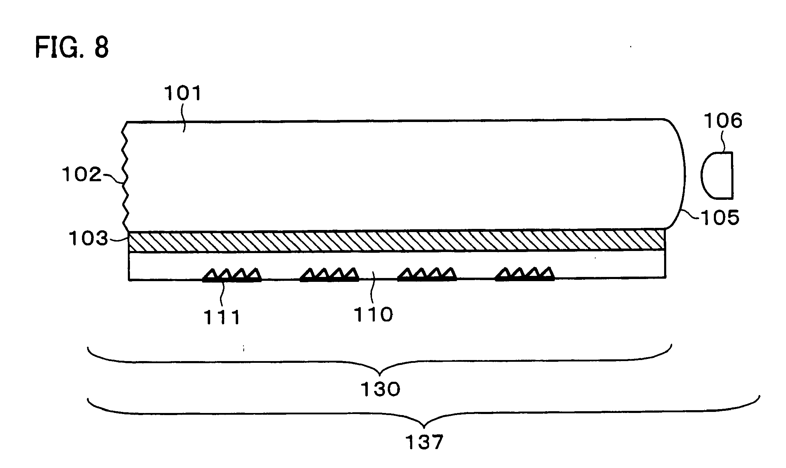

The following explains another embodiment of the present invention in reference to Fig. 8. Note that, for ease of explanation, the same reference numerals are used for the members having the same functions as the members used in Embodiments 1 and 2, and further explanations thereof are omitted. The present embodiment explains an example providing, in addition to the above arrangement, a scattering layer, by forming depressions and projections on a surface of the scattering light guide layer which is constituted of the second light guide body, the surface opposite to a surface in contact with the first light guide body.

Fig. 8 is a side view showing a schematic arrangement of a light guide plate 130 and a lighting apparatus 137 of the present embodiment. In Embodiment 3, the light guide plate 130 includes, as basic members, the first light guide body 101 having the refractive index n1, the second light guide body 103 having the refractive index n2 lower than the refractive index n1, and the third light guide body 110 having the refractive index n3 higher than the refractive index n2, which are stacked in this order. Those light guide bodies are optically connected with each other.

In the light guide plate 130 of the present embodiment, a minute pattern 111 (scattering layer) physically in the shape of depressions is formed on a surface of the third light guide body 110, the surface opposite to a surface in contact with the second light guide body 103. Moreover, the reflection section 102 is formed on a surface (side) of the first light guide body 101, the surface (side) opposite to the light guide surface. The reflection section 102 is constituted of many reflection surfaces. The reflection surfaces inclined in the same direction are parallel to each other, making the reflection section 102 in the shape of so-called a sawtooth.

Moreover, in the light guide plate 130 of the present embodiment, the cylindrical lens (light focusing optical element) 105 is attached to the light guide surface of the first light guide body 101. More specifically, the first light guide body 101 and the cylindrical lens 105 are formed integrally. That is, the lighting apparatus 137 of the present embodiment is constituted of the light source unit 106 and the light guide plate 130. Moreover, as with Embodiment 1, the light source unit 106 of the present embodiment is constituted of a plurality of LEDs.

Note that, in Fig. 8, sizes of the components are exaggerated for better understanding, those are not the actual sizes.

In the present embodiment, the first light guide body 101 is formed by a material having the refractive index n 1 of 1.49, the second light guide body 103 is formed by a material having the refractive index n2 of 1.43, and the third light guide body 110 is formed by a material having the refractive index n3 which is the same as the refractive index n1. Note that, a method of stacking the first light guide body 101, the second light guide body 103, and the third light guide body 110 is the same as those of Embodiment 2.

A significant difference between the present embodiment and Embodiment 2 is a method of forming the reflection section 102, the cylindrical lens 105, and the minute pattern 111.

Generally, molding of an acrylic resin which is a material for the light guide body is performed by two methods: extrusion and casting. The extrusion is a method of manufacturing the light guide body in such a manner that a lump of acrylic resin which is not completely cured is pressed, for example, between rollers, to be thinner. Advantages of the extrusion are excellent mass productivity and low cost. However, the extrusion is unsuitable for producing the light guide body other than standardized products. The casting is a method of manufacturing the light guide body by pouring molten acrylic resin into a certain mold. An advantage of the casting is that any shape of light guide body can be manufactured. A disadvantage of the casting is high cost.

The first light guide body 101of the present embodiment is manufactured by the casting. More specifically, the first light guide body 101 is manufactured by pouring the acrylic resin into a mold, which (i) has on one end a so-called sawtooth shape so as to form one end surface of the first light guide body 101, that is, the surface opposite to a surface on which the light guide surface is formed, and (ii) has on the other end a shape of the cylindrical lens so as to form another end surface of the first light guide body 101, that is, the surface on which the light guide surface is formed. Similarly, the third light guide body 110 is manufactured by pouring an acrylic resin material into a mold which has a shape of the depressed minute pattern 111.

In the case of the casting in which the light guide body is manufactured by using the mold as described above, the cost is generally high. However, in consideration of the cost of (i) the cutting process for forming the reflection section 102, (ii) installation of the cylindrical lens 105, and (iii) formation of the minute pattern 111, which are required when manufacturing the light guide body by the extrusion, the manufacturing through casting is simpler even though the cost is almost the same.

Moreover, the cylindrical lens 105 formed integrally has the same effect as that of the cylindrical lens 105 adhered by an optical adhesive to the light guide surface of the first light guide body 101.

In the present embodiment, the basic operation theory is substantially identical to that of Embodiment 1; therefore, the following explanation is made only to clarify the difference therebetween. The light from the light source unit 106 is focused in the first light guide body 101 in a range of, for example, the light distribution angles substantially ±13.3 degrees by the cylindrical lens 105 formed on the end surface of the first light guide body 101. In Embodiments 1 and 2, the light distributed in a range of the light distribution angles ±20 degrees becomes the light distributed in a range of substantially the light distribution angles ±13.3 degrees by refraction occurred when the light is incident on the first light guide body 101 via the air layer. In the present embodiment, the light do not pass through the air layer, that is, the first light guide body 101 and the cylindrical lens 105 are formed integrally by using the same material. On this account, it is necessary to design the shape of the cylindrical lens 105 of the present embodiment, assuming the light distribution angle of the light propagating in the first light guide body 101. However, the light distribution angle of the light propagating in the first light guide body 101 is not limited to the angle in the above range, and it is more preferable that the light be focused in a narrower range. Then, the light irradiating the first light guide body 101 repeats the total reflection by the inner surfaces of the first light guide body 101, and reaches the reflection section 102.

As with Embodiment 1, the reflection section 102 is so formed as to be inclined at 15 degrees with respect to the light guide surface. Then, the light having propagated to the reflection section 102 changes its angle by 30 degrees when being reflected. In Embodiment 1, the reflection section 102 is inclined in both directions, that is, the reflection section 102 is elbowed when viewed from the cross-sectional surface. In the present embodiment, the reflection section 102 appears to be a sawtooth constituted of a plurality of elbowed inclined surfaces. Therefore, optically, as with Embodiment 1, the light having been reflected by the reflection section 102 is reflected in a direction of the second light guide body 103 and in the opposite direction, when viewed from the first light guide body 1. Moreover, as shown in Fig. 8, the projections of the reflection section 102 in the present embodiment are short. That is, the reflection section 102 is made in the form of a sawtooth constituted of a plurality of elbowed inclined surfaces having the same oblique angle. With this configuration, it is possible to reduce a thickness of the reflection section 102, the thickness in the direction from the light guide surface to the surface on which the reflection section 102 is formed (in the direction perpendicular to the light guide surface). The light guide plate 130 having the reflection section 102 in the form of a sawtooth can be preferably applied to a liquid crystal display apparatus having a small display periphery (so-called frame), called a narrow frame which is now becoming the mainstream.

A significant difference between the present embodiment and Embodiment 2 is the minute pattern 111, which is formed on a surface of the third light guide body 110, the surface opposite to a surface on which the second light guide body 103 is formed. Then, the light having been incident on the third light guide body 110 is reflected by the minute pattern 111, and is emitted to the outside of the light guide plate 130, that is, emitted to the outside of the first light guide body 101.

The shape of the minute pattern 111 is different from that of the reflection dot 104 of Embodiment 2, but basic functions are the same with each other. That is, a part of the light having undergone the total reflection is emitted to the outside of the light guide plate 130. Because the direction of light emission can be freely controlled by the shape of the minute pattern 111, it is possible to increase efficiency of light extraction. In the present embodiment, the minute pattern 111 is formed on the third light guide body 110 and is projected toward the second light guide body 103. However, the shape of the minute pattern 111 is not especially limited. For example, the projection of minute pattern 111 may be formed on the other surface of the third light guide body 110, the surface opposite to a surface on which the second light guide body 103 is adhered, so that the minute pattern 111 is projected when viewing the third light guide body 110 from the side of the second light guide body 103.

Moreover, the minute pattern 111 explained above is created by forming depressions on the third light guide body 110. However, for example, a medium, such as monomers, having a density different from the third light guide body 110 may be injected into the depressions. Here, a refractive index distribution occurs due to diffusion of the medium. As a result, the light is scattered also in this arrangement at an interface of the third light guide body 110 and the medium. That is to say, the minute pattern 111 can be a component having optical depressions and projections.

### (Embodiment 4)

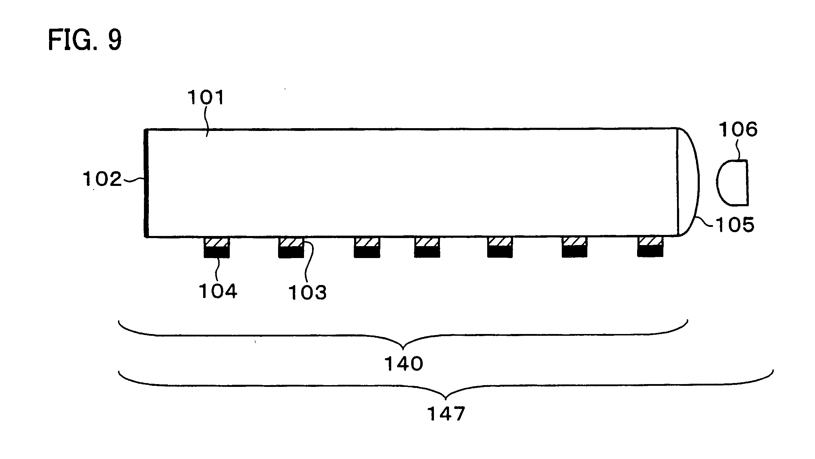

The following explains still another embodiment of the present invention in reference to Fig. 9. Note that, for ease of explanation, the same reference numerals are used for the members having the same functions as the members used in Embodiments 1 to 3, and further explanations thereof are omitted.

Fig. 9 is a side view showing a schematic arrangement of a light guide plate and a lighting apparatus of the present embodiment. In Embodiment 4, a light guide plate 140 includes, as basic members, the first light guide body 101 having the refractive index n1, and a plurality of the second light guide bodies 103 each having the refractive index n2 lower than the refractive index n1. Those light guide bodies are optically connected with each other. Moreover, the reflection dots 104 are formed on a surface of each second light guide body 103, the surface opposite to a surface on which the first light guide body 101 is formed. Further, the reflection section 102, which is not inclined physically, is provided on one end surface of the first light guide body 101, that is, on a surface opposite to the light guide surface. The reflection section 102 is formed by holography, and has a function of off-axis. That is, in the present embodiment, the reflection section 102 is constituted of a hologram. By using the holography, it is possible to obtain highly efficient reflection and give the function of off-axis. The off-axis means an effect that an the angle of the regular reflection (reflection angle) changes apparently. For example, when light is incident on a mirror at +30 degrees with respect to the normal line of a reflection surface, the reflection angle becomes the same as the incident angle of 30 degrees. Meanwhile, when light is incident on the hologram, whose off-axis is 15 degrees, at 30 degrees, the reflection angle can be 45 degrees (or 15 degrees). That is, even though the hologram is flat and is parallel to the light guide surface, the hologram functions in the same way as the mirror inclined with respect to the light guide surface. Moreover, as with Embodiment 3, the cylindrical lens 105 is integrally formed on the light guide surface of the first light guide body 101 in the present embodiment. Thus, by integrally forming the cylindrical lens 105 and the first light guide body 101, it is possible to avoid the light loss which is caused by reflection at the above-described two interfaces. Further, the lighting apparatus 147 is constituted of the light guide plate 140 having the same as above and the light source unit 106 which is the light source constitute. As with Embodiment 1, the light source unit 106 is constituted of a plurality of LEDs in the present embodiment.

Note that, in Fig. 9, sizes of the components are exaggerated for better understanding, those are not the actual sizes.

In the present embodiment, the first light guide body 101 is formed by a material having the refractive index n1 of 1.49, and the second light guide body 103 is formed by a material having the refractive index n2 of 1.43. More specifically, as with Embodiment 2, the acrylic plate is used as the first light guide body 101, and the adhesive for optical component assembly is used as the second light guide body 103. Fabrication of the reflection dots 104 is mostly performed by screen printing. The screen printing is a method of printing, for example, materials (solution containing TiO₂, etc.) of the reflection dots 104 using a screen plate having desired dot patterns. By using a master plate having a mask pattern, it is possible to inexpensively produce a large number of screen plates having the same pattern. Because the second light guide body 103 and the reflection dot 104 are formed at substantially the same place in the present embodiment, it is possible to use the screen plates which are produced by the same master plate. The screen plate is much lower in price than the master plate, so that the cost can be reduced. Further, it is also possible to simultaneously apply materials of the reflection dot 104 and the second light guide body 103, by mixing them together.

In the present embodiment, the basic operation theory is substantially identical to that of Embodiment 1; therefore the following explanation is made only to clarify the difference therebetween. The light from the light source unit 106 is focused in a range of the light distribution angles substantially ±13.3 degrees by the cylindrical lens 105 formed on the end surface (light guide surface) of the first light guide body 101. In Embodiments 1 and 2, the light distribution angle is in a range of ±20 degrees, which is different from the present embodiment. In Embodiments 1 and 2, the light distribution in a range of ±20 degrees becomes the light distribution in a range of substantially ±13.3 degrees due to the refraction occurred when the light is incident on the first light guide body 101 via the air layer. However, in the present embodiment, the air layer is not provided between the cylindrical lens 105 and the first light guide body 101. Therefore, the cylindrical lens 105 needs to be designed in light of the light distribution angle in the first light guide body 101. However, the light distribution angle is not especially limited, and the narrower angle range is more preferable. Then, the light having irradiated the first light guide body 101 repeats the total reflection by the inner surfaces of the first light guide body 101 before reaching the reflection section 102. The reflection section 102 is the hologram whose off-axis is 15 degrees. Therefore, the light having been guided to the reflection section 102 changes its angle by 30 degrees before being incident on the second light guide body 103. Note that, the reflection section 102 constituted of the hologram is not so projected, that is, the thickness of the reflection section 102 in a direction from the light guide surface to the surface opposite to the light guiding surface (in a direction perpendicular to the light guide surface) is very thin. As described, the light guide plate 140 in which the reflection section 102 is made of a hologram can be preferably applied to a liquid crystal display apparatus having a small display periphery (so-called frame), called a narrow frame which is now becoming the mainstream.

A significant difference between the present embodiment and Embodiment 2 is that the second light guide bodies 103 is provided only partially. In other words, in the present embodiment, the second light guide bodies 103 and the reflection dots 104 are provided partially on a surface of the first light guide body 101. The above arrangement is different from that in Embodiment 1, but the functions of the above arrangement is the same as those of the arrangement in Embodiment 1. The following explains the reason for this theory.

The light having irradiated from the cylindrical lens 105 formed on the light guide surface propagates to the reflection section 102 by repeating the total reflection. Then, when the light having been reflected by the reflection section 102 is incident on a portion where the second light guide body 103 is not formed, the light propagates in the first light guide body 101 while repeating the total reflection; on the other hand, the light having been incident on the second light guide body 103 is guided to the reflection dot 104. That is, the second light guide bodies 103 is only required to be provided on potions where the reflection dots 104 are formed. Thus, because the second light guide bodies 103 are formed only on potions where the reflection dots 104 are formed, the material for forming the second light guide bodies 103 can be reduced. Therefore, the cost can be reduced. Moreover, the interface of the first light guide body 101 and the second light guide bodies 103 is narrowed, thereby realizing further higher efficiency.

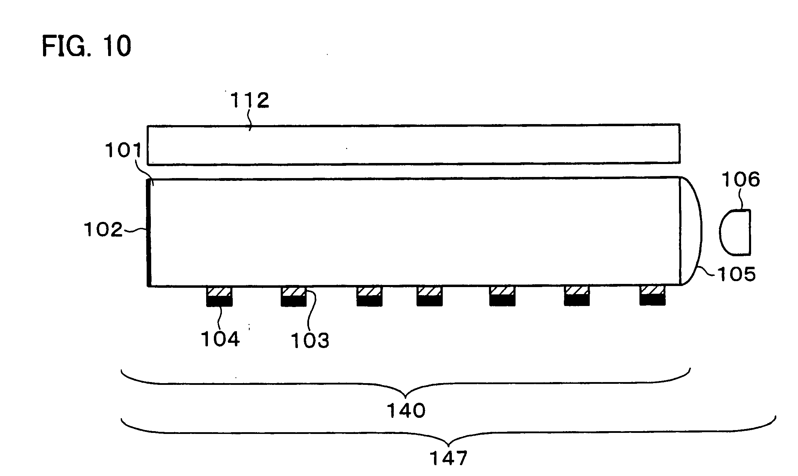

As shown in Fig. 10, a liquid crystal display apparatus (display apparatus) of the present embodiment includes a liquid crystal panel 112 which is provided at a position on which the light from the lighting apparatus 147 is incident. In other words, the display apparatus of the present embodiment includes the liquid crystal panel 112, the light guide plate 140 explained above, and the light source unit 106 of three primary colors (R, G, and B).

In terms of the function as a light source, the LED has the following superior features: (1) the luminous efficiency improves remarkably, suggesting a possibility that the LED achieves greater power reduction than a fluorescent lamp in the future; (2) the color reproducibility is high because emission spectra are dense; (3) because the LED has a long life, maintenance, such as changing the light source, is not necessary; (4) because mercury is not used, LED is more environmentally friendly; and (5) regardless of environmental temperature, the LED can be activated at a high speed.

However, because the LED is generally the point light source and three primary colors are separated, there has been some difficulties in using LED as a backlight of a display apparatus etc. since the backlight in this application needs to be a white uniform planar light source.

As described, the display apparatus of the present embodiment uses the light guide plate 140 explained above. More specifically, the light guide plate 140 is constituted of a single light guide plate in which a plurality of light guide bodies are bonded. With the light guide plate 140, the separate lights from the point light sources of three primary colors are merged, and are converted into a uniform white light emitted from the planar light source. Therefore, by using the light guide plate 140 as, for example, the backlight of the liquid crystal panel 112, it becomes possible to realize the display apparatus having the above superior features (1) to (5).

Moreover, for example, when the backlight is formed by a laser light source and the light guide plate of the present invention, it becomes possible to obtain further higher color reproducibility. An arbitrary LED laser may be used depending on necessary color reproducibility, power, size, and cost.

### (Embodiment 5)

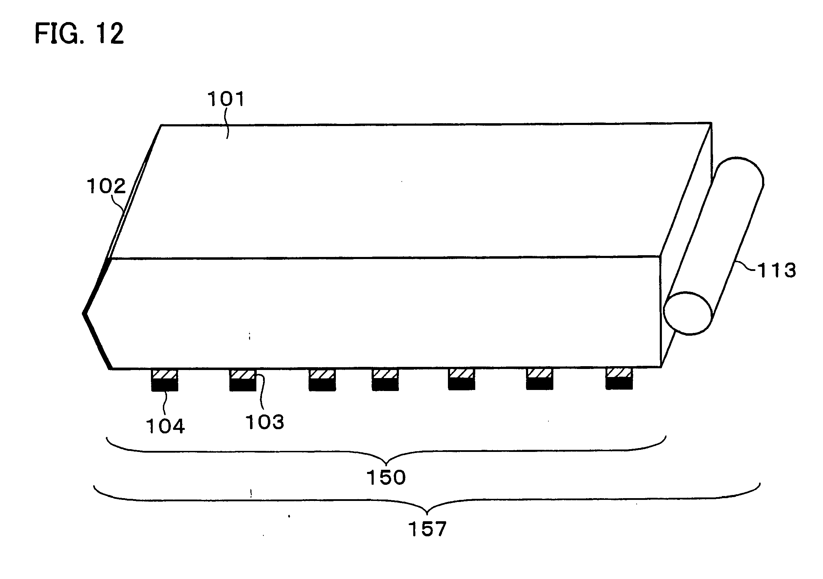

The following explains still another embodiment of the present invention in reference to Fig. 12. Note that, for ease of explanation, the same reference numerals are used for the members having the same functions as the members used in Embodiments 1 to 4, and further explanations thereof are omitted.

Fig. 12 is a side view showing a schematic arrangement of a light guide plate and a lighting apparatus of the present embodiment. As shown in Fig. 12, the lighting apparatus 157 is constituted of a light guide plate 150 and a fluorescent tube 113 which is the light source.

The light guide plate 150 of the present embodiment includes, as basic members, the first light guide body (first light guide layer) 101, the reflection section (reflection means) 102, a plurality of second light guide bodies (second light guide layers) 103, and a plurality of reflection dots (scattering layers) 104. The reflection dot 104 is formed on the second light guide body 103, and the second light guide body 103 and the reflection dot 104 constitute the scattering light guide layer.

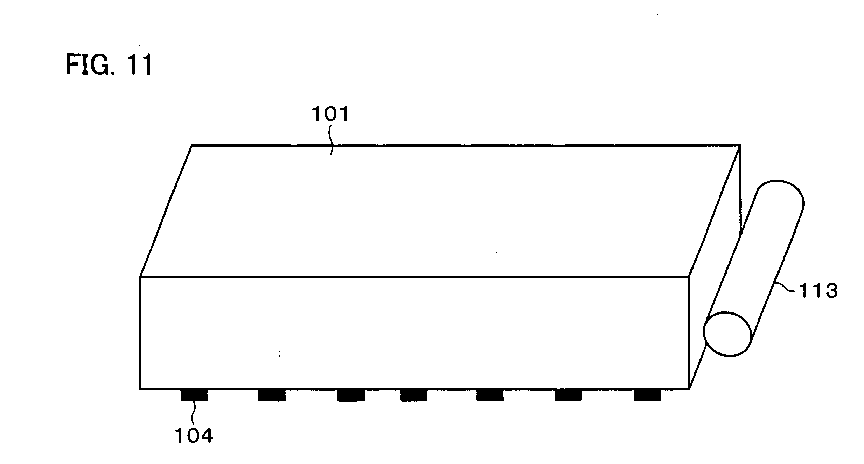

With a combination of the light guide plate 150 and the fluorescent tube 157, the lighting apparatus 157 of the present embodiment obtains the following effects. The scattering property of the reflection dot changes depending on wavelength (color) of the light. Therefore, in the case of producing the planar light source through a fluorescent tube edge lamp method of one-sided light illumination as shown in Fig. 11 by using the reflection dots, the following defect occurs. In contrast to the light emitted from the center of the light guide plate, the order of light intensity (higher to lower) is red, green, and blue in the light emitted from a side, close to the lamp, of the light guide plate, while the order is blue, green, and red in light emitted from a side, far from the lamp, of the light guide plate. This has been causing the conventional color unevenness on the surface.

In contrast, as shown in Fig. 12, in the case of combining (i) the light guide plate 150 having an arrangement similar to that of the light guide plate 140 explained in Embodiment 4 and (ii) the fluorescent tube 113, a part of the incident light, which is the light distributed in a range out of the light distribution angles substantially ±16.1 degrees, enters into the second light guide body 103 because of the refractive index, and is mostly scattered before reaching the reflection section 102. Therefore, as explained above, the side close to the fluorescent tube 113 becomes blue and the side close to the reflection section 102 becomes red. However, the light distributed in a range of the light distribution angles substantially ±16.1 degrees reaches the reflection section 102 without entering into the second light guide body 103. Then, the light is reflected by the reflection section 102, so that the light is changed to the light distributed in a range of the light distribution angles substantially 13.9 degrees and substantially 46.1 degrees and in a range of the light distribution angles substantially -13.9 degrees and substantially -46.1 degrees. Then, after the angle is changed by the reflection section 102, the light enters into the second light guide body 103. That is, because the reflection section 102 is provided at a position opposite to the light guide surface, the light appears to proceed in the same way as in the case where the light sources are provided on both sides of the first light guide body 101. On this account, the color unevenness is offset by the light having been emitted from the light guide surface and the light having been reflected by the reflection section 102. Thus, it is possible to eliminate the color unevenness which has been a conventional problem caused in the arrangement where the light is incident only on one side.

It should be noted that, the present invention is not limited to the foregoing light guide plate, the lighting apparatus using the light guide plate, and the display apparatus, which have been described in Embodiments 1 to 5. For example, it is obvious that the reflection section 102 explained in one embodiment can be applied to the arrangement of other embodiment.

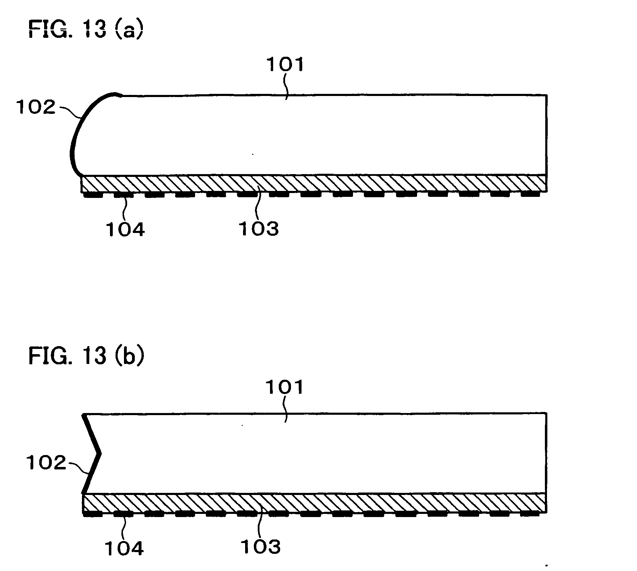

Moreover, for example, the reflection section 102 can be modified as shown in examples in Figs. 13(a) and 13(b). More specifically, the reflection section 102 can be curved when viewed from the cross-sectional surface, or can be projected in a direction of the light guide surface when viewed from the cross-sectional surface. Note that, though the curve of the reflection section 102 shown in Fig. 13(a) is exaggerated, the angle of the light reflected by the reflection section 102 is specified as an angle larger than a critical angle of the first light guide body 101 and the second light guide body 103, and smaller than a critical angle of the second light guide body 103 and the outside (air). In other words, the reflection section 102 needs to be so set that (i) the light having been reflected by the reflection section 102 is refracted by the interface of the first light guide body 101 and the second light guide body 103 and the light proceeds in a direction of the second light guide body 103, and (ii) the light having been reflected by the reflection section 102 undergoes the total reflection at the interface of the first light guide body 101 and the outside (air). On this account, the light having been reflected by the reflection section 102 is incident on the second light guide body 103, and is diffused by the reflection dot 104. In this manner, it becomes possible to produce an uniform planar light source.

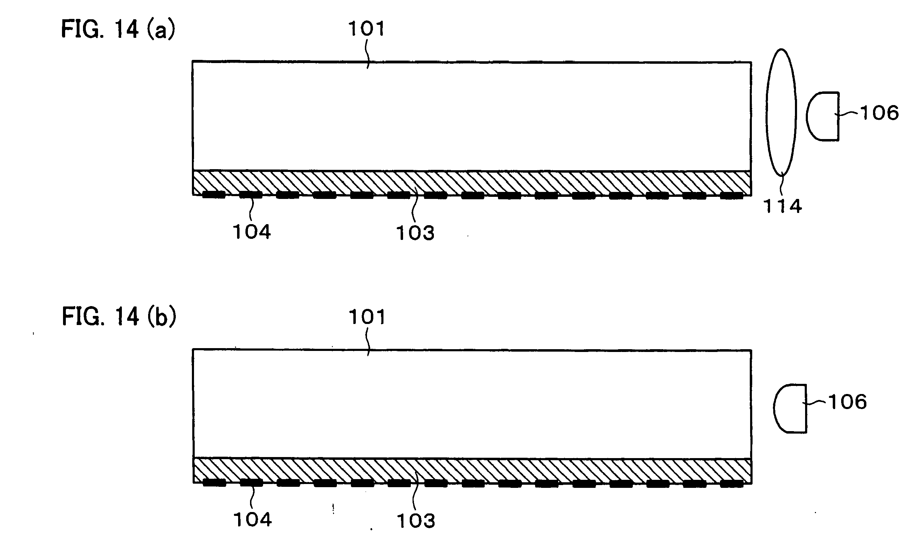

Moreover, various modification is possible for the light focusing optical element provided on a side of the light guide surface or attached to the light guide surface of the first light guide body 101. Specific examples are (i) an arrangement of using the cylindrical lens 105 shown in Fig. 1, (ii) an arrangement in which the cylindrical lens and the first light guide body 101 are integrally formed as shown in Fig.8, and (iii) an arrangement of using a convex lens 114 shown in Fig. 14(a). For example, in order to realize the foregoing arrangement in which the light having been emitted from the light source unit 106 and having been distributed in a range of the distribution angles ±45 degrees is focused by the convex lens 114 with a light distribution angles ±20 degrees, when the first light guide body 101 has a thickness of 10 mm, it is necessary to set a 2mm thick convex lens 114 having a curvature of 13 mm on a portion away from a light emitting point of the LED by 3.2 mm. Note that, the convex lens 114 may be a centrosymmetric lens, but it is more preferable to use a lens which induces anisotropy in the light irradiating the light guide surface, that is, the light is anisotropic depending on whether the light is propagating in a direction perpendicular to the light guide surface, or is propagating in a direction horizontal to the light guide surface. Further, for example, as shown in Fig. 14(b), the light source, such as the LED, may be directly provided without using the light focusing optical element (lens). Especially, in recent years, the LED having a light-focusing function has been put to practical use. With the use of such LED, the light focusing optical element can be omitted.

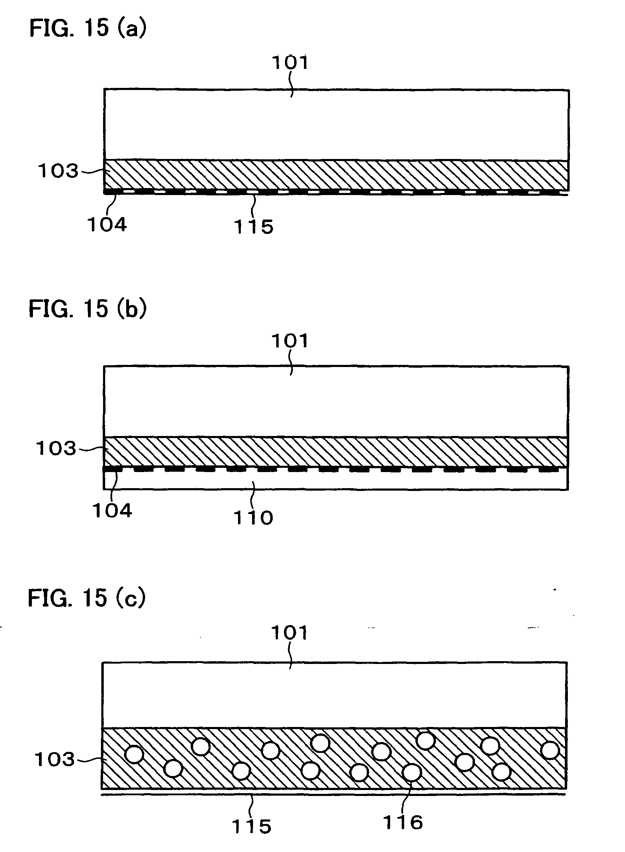

Moreover, for example, there are various arrangements of light scattering means, such as the reflection dot 104. For example, in Fig. 15(a), the reflection dots 104 are formed on the surface of the second light guide body 103 having a low refractive index, and further, reflection plates 115 are provided between the reflection dots 104. This arrangement is effective to put back the stray light which has not returned to the first light guide body 101 upon scattering/ diffusion by the reflection dots 104. The reflection plate 115 may be made of a white sheet of foamed PET (polyethylene terephthalate).

Fig. 15(b) shows an example in which the position of the reflection dots 104 is changed. In this example, the reflection dots 104 are formed inside the third light guide body 110. The reflection dots 104 may be formed on a surface of the third light guide body 110, the surface on a side of the air as in the case above, or on a surface of the third light guide body 110, the surface on a side of the second light guide body 103.

In Fig. 15(c), light diffusing materials (light scattering objects) 116 are used instead of the reflection dots 104. The light diffusing materials 116 are dispersed in the second light guide body 103. The light having passed through the second light guide body 103 and having undergone the total reflection at the interface of the second light guide body 103 and the air is scattered by the light diffusing materials 116 located in the light path, and the diffused light proceeds in a direction of the first light guide body 101. Moreover, by placing the reflection plate 115 on a surface of the second light guide body 103, the surface opposite to a surface in contact with the first light guide body, the diffused light is emitted from the light guide plate more efficiently. Moreover, dispersion of the light diffusing materials 116 in the second light guide body 103 may be carried out by a method taking the step of mixing the second light guide body 103 with fine particles, such as glass or plastic beads (light diffusing materials), having refractive index different from that of the second light guide body 103 and having a diameter of substantially several micrometers. Moreover, silver fine particles (several micrometers) or hollow fine particles can be mixed as the light diffusing materials 116.

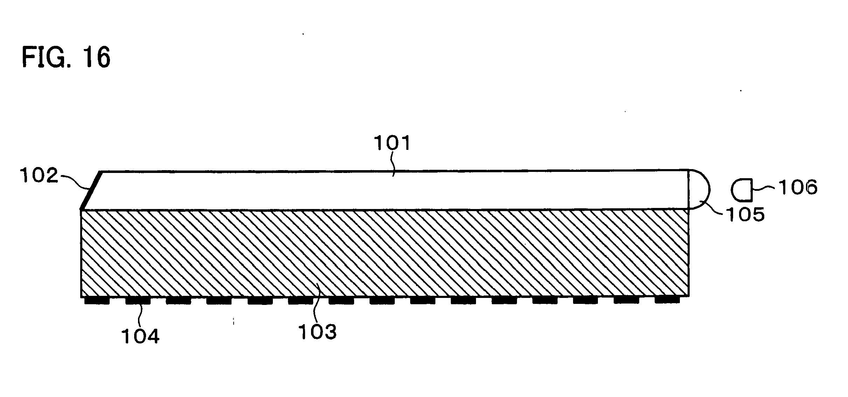

Moreover, as shown in Fig. 16, the thickness of the first light guide body 101 is not especially limited, and each thickness of the first light guide body 101 and the second light guide body 103 can be determined arbitrarily. Therefore, for example, the second light guide body 103 can be thicker than the first light guide body 101 as shown in Fig. 16.

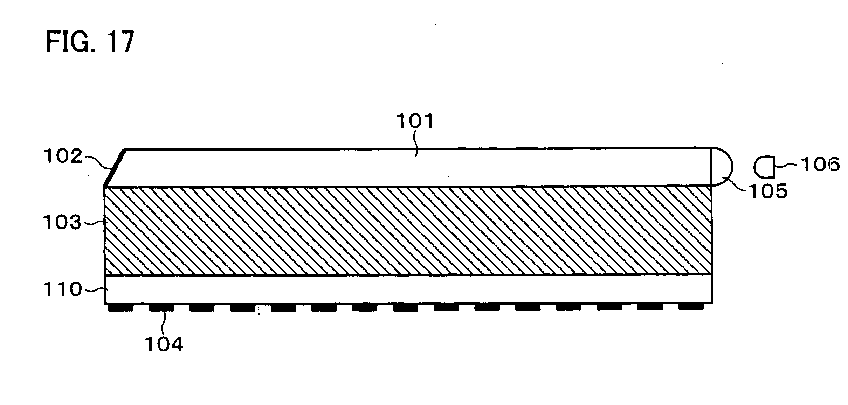

Moreover, for example, in an arrangement in which the first light guide body 101, the second light guide body 103, and the third light guide body 110 are stacked as shown in Fig. 17, the second light guide body 103 may have the greatest thickness, which is sandwiched between the first light guide body 101 and the third light guide body 110 both having a high refractive index.

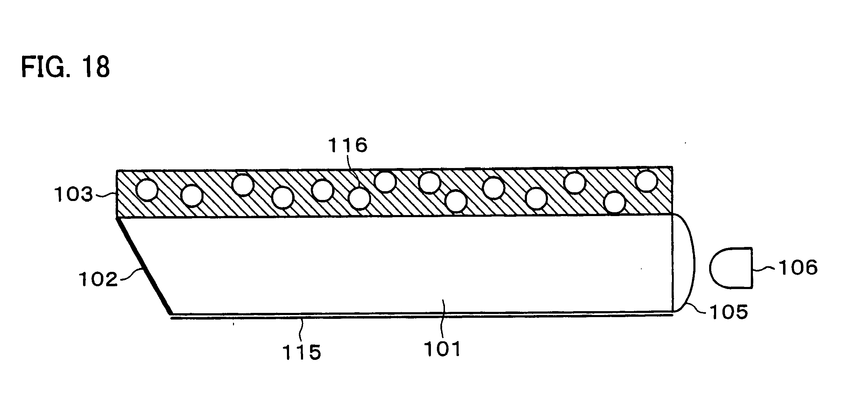

As shown in Fig. 18, (i) positions of the light guide body (first light guide body 101) having a high refractive index and the light guide body (second light guide body 103) having a low refractive index and (ii) a direction of light emission can be changed by scattering means (scattering layer), such as the light diffusing materials 116. In this example, after the light has been incident on the first light guide body 101 having the high refractive index, the light having been incident is guided to the reflection section 102 while repeating the total reflection in the first light guide body 101. Then, the light having been reflected by the reflection section 102 is guided into the first light guide body 101 and the second light guide body 103. The light having been guided to the second light guide body 103 is scattered to the outside (air) from the second light guide body 103 by the light diffusing materials 116 contained in the second light guide body 103. Here, by placing the reflection plate 115 on the interface of the first light guide body 101 and the outside (air), the stray light can be efficiently emitted from the first light guide body 101.

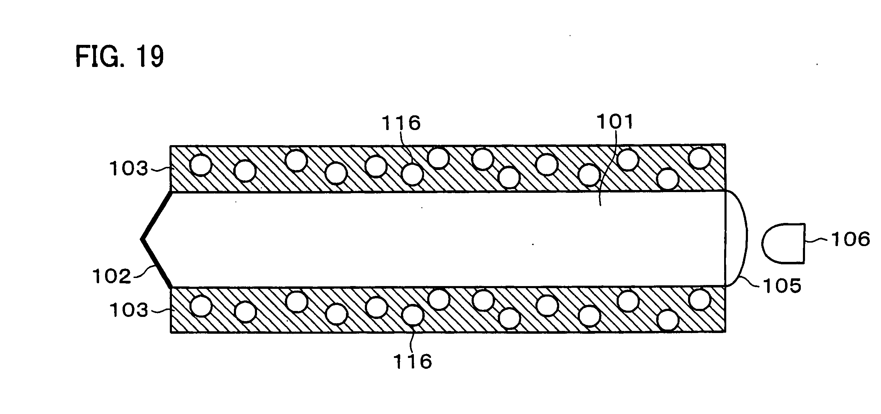

Moreover, for example, as shown in Fig. 19, the second light guide bodies 103 may be provided on both sides of the first light guide body 101, and the light diffusing materials 116 may be contained in each second light guide body 103. Note that, instead of the second light guide body 103 containing the light diffusing materials 116, the second light guide bodies 103 each having the reflection dots 104 on a surface opposite to a surface in contact with the first light guide body 101 can be formed on both sides of the first light guide body 101.

As shown in Fig. 19, the cylindrical lens 105 and the light source unit 106 are provided on the light guide surface of the first light guide body 101, and the reflection section 102 is provided on a surface opposite to the light guide surface. In this arrangement, the light having undergone the total reflection in the first light guide body 101 is changed in distribution angle and is reflected by the reflection section 102. Then, the light having been reflected by the reflection section 102 proceeds between the two second light guide bodies 103. The light having been scattered by the light diffusing material 116 is emitted from the respective outer surfaces of the two second light guide bodies 103, that is, the light is emitted from both surfaces of the light guide plate. By using the light guide plate thus arranged, it is possible to easily realize, for example, a double-sided display in which liquid crystal panels are provided on both sides of the display. The foregoing display apparatus can be used as a display for displaying information on both sides of the display, such as a road traffic sign. Moreover, by adjusting distribution and density of the light diffusing materials 116 or the reflection dots 104, it becomes possible to differentiate illuminance between a front surface and a back surface of the lighting apparatus. Moreover, the structure for emitting light from both sides can be created by attaching two light guide bodies of Embodiments 1 to 4 back-to-back, so that the both sides of the display emit light. However, as shown in Fig. 19, by providing the second light guide body 103 on each side of the first light guide body 101, it is possible to further reduce the thickness and the number of components.

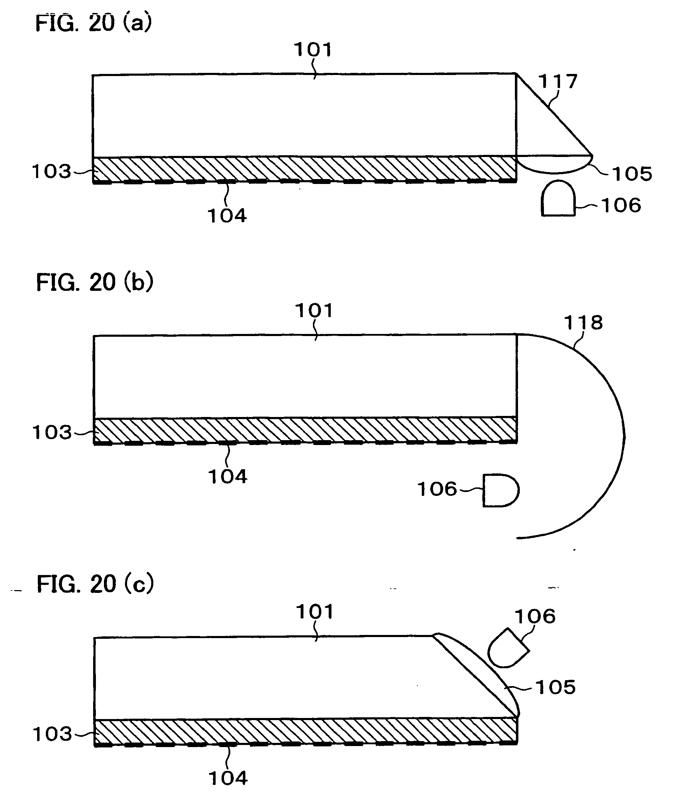

Moreover, as shown in Figs. 20(a) to 20(c), there are various methods of the light incidence onto the first light guide body 101. None of the examples shown in these figures include the light source unit 106 on the same plane as that of the first light guide body 101; however, the same effect can be obtained. More specifically, for example, as shown in Fig. 20(a), it may be arranged so that the light whose angle is changed by an optical element 117, such as a prism, is incident on the first light guide body 101, or that, as shown in Fig. 20(b), the light whose angle is changed by a curved reflection mirror 118 is incident on the first light guide body 101, or that, as shown in Fig. 20(c), the light is incident on the light guide surface which is inclined with respect to the stacking surface of the first light guide body 101.

Moreover, a material of the second light guide body 103 having the refractive index lower than that of the first light guide body 101 used in each embodiment can be a material which has a controllable refractive index and absorbs a small amount of light. In addition, a method of forming the second light guide body 103, or other members is not especially limited. As long as the same effect can be obtained, any material can be used.

Moreover, it is more preferable that the scattering layer of the present embodiment be constituted of a light scattering object. In the above arrangement in which the scattering layer is constituted of the light scattering object, the scattering layer can be constituted more easily by, for example, putting the light scattering object into the second light guide body 103 or the third light guide body 110 when forming the second light guide body 103 or the third light guide body 110. Moreover, by thus putting the light scattering object into the second light guide body 103 so as to form the scattering layer, the second light guide body 103 and the scattering layer can be formed integrally.

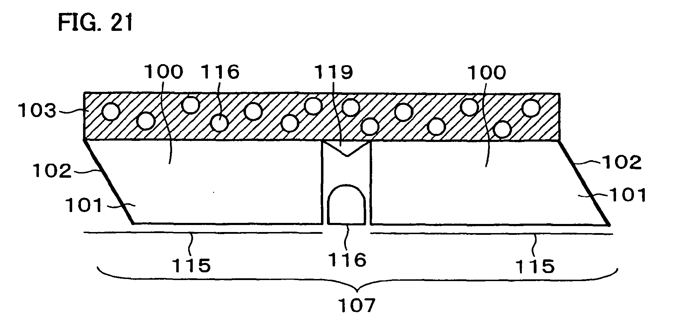

Next, Fig. 21 shows another modification example of the lighting apparatus of the present embodiment.

The lighting apparatus 107 shown in Fig. 21 includes the second light guide body 103 containing the light diffusing materials 116, the light guide plate 100, the light source unit 106, the reflection plate 115, and a mirror 119. The second light guide body 103 has two first light guide bodies 101, the light guide surfaces of one of the first light guide bodies 101 is opposed to the light guide surface of another light guide body 101 with a certain gap therebetween, and the light source unit 106 is provided in the gap. Note that, the light source unit 106 is made of an LED which emits light in a crosswise direction of the light source, so-called a side emitter type LED.

Moreover, the mirror 119 is provided between the light source unit 106 and the second light guide body 103. With this arrangement, the light having been slightly leaked upward the light source unit 106, that is, toward the second light guide body can be efficiently guided to the first light guide bodies 101. Therefore, it is possible to obtain a brighter lighting apparatus with less luminance nonuniformity and less color unevenness.

The light having been incident on the first light guide bodies 101 provided on both sides of the light source unit 106 is reflected by each reflection section 102. The angle of one reflection section 102 with respect to the light guide surface is the same as that of another reflection section 102 with respect to the light guide surface.

Since the above arrangement requires only one light source unit 106 for two light guide surfaces of the first light guide bodies 101, the space can be reduced.

Thus, by providing the light source unit 106 between the light guide surfaces, it becomes possible to provide the reflection section 102 on the outer surface of each first light guide body 101 of the lighting apparatus 107.

Next, Fig. 22(a) shows a flat light source apparatus 117 formed by placing two lighting apparatuses 107 side by side, each having an arrangement similar to that of Fig. 21.

In the lighting apparatus 107 shown in Fig. 22(a), the reflection section 102 is so formed as to cover only an end surface opposite to the light guide surface of the first light guide body 101. Meanwhile, in each lighting apparatus 107 shown in Fig. 22(a), the reflection section 102 is so formed as to cover (i) the end surface opposite to the light guide surface of the first light guide body 101 and (ii) an end surface of the light guide body 103. Except for this difference, the arrangements are substantially the same with each other.

As shown in Fig. 22(a), by placing the reflection sections 102 of the lighting apparatuses 107, with no space therebetween, so as to be in contact with each other, it becomes possible to realize the flat light source apparatus 177 which includes two lighting apparatuses 107 placed side by side with no space therebetween. This light source apparatus 177 is uniform, and has a large area.

It should be noted that the present invention is not limited to the arrangement of Fig. 22(a) in which two lighting apparatuses 107 are placed side by side, and it may be arranged so that two or more lighting apparatuses 107 may be provided side by side. With this arrangement, it is possible to produce the flat light source apparatus which has a larger area.

According to the above arrangement, it is possible to realize the flat light source apparatus 177 by combining a plurality of lighting apparatuses 177 having the same arrangement. Therefore, it is possible to improve productivity in manufacturing the flat light source apparatus 177.

Each of Figs. 22(b) to 22(d) show the flat light source apparatus in accordance with another embodiment of the present invention.

As shown in Fig. 22(b), the flat light source apparatus 167 is constituted of (i) the lighting apparatus 107 having the elbowed reflection section as shown in Fig. 1 and (ii) the lighting apparatus 107 having the reflection section to be fit in the elbowed reflection section with no space therebetween. That is, the reflection section 102 of the flat light source apparatus 167 is formed by combining the reflection section projected and the reflection section depressed. Thus, by placing those lighting apparatuses 107 with no space therebetween, it becomes possible to realize the flat light source apparatus 167 which has a large area and is capable of emitting uniform light.

Fig. 21(c) shows the flat light source apparatus 167 constituted of two lighting apparatuses 107 each having a reflection sections inclined with respect to the light guide surface, and these reflection sections are combined with each other.

Fig. 21 (d) shows the flat light source apparatus 167 in which the reflection sections of the respective lighting apparatuses 107 shown in Fig. 8 are combined with each other.

In all of Figs. 21 (b) to 21 (d), the reflection sections of the respective light guide plates of the respective lighting apparatuses 107 are combined with each other, thereby realizing the flat light source apparatus 167 in which the light guide plates 100 have substantially no space therebetween. With this arrangement, the light source apparatus 167 is uniform and has a large area. Note that, the reflection section 102 of the flat light source apparatus 167 is constituted of the respective reflection sections of the plural respective lighting apparatuses 107.

As described, it is more preferable that the light guide plate of the present invention include a first light guide layer on which light from a light source is incident, made of a material having a refractive index n1; and a scattering light guide layer for emitting, as scattering light, light incident on the first light guide layer, the first light guide layer and the scattering light guide layer being stacked on each other in a direction orthogonal to a direction of light propagating in the first light guide layer, wherein: the scattering light guide layer includes at least (i) a second light guide layer made of a material having a refractive index n2 lower than the refractive index n1, adjacent to the first light guide layer, and (ii) a scattering layer for scattering light propagating to the second light guide layer; and the first light guide layer includes, on a surface opposite to a light guide surface on which the light is incident, reflection means for reflecting the light propagating in the first light guide layer so that the light is incident on the scattering light guide layer.

This arrangement offers the following effect: (i) substantially all the light beams having been incident on the first light guide layer from the end surface opposite to the end surface on which the reflection means is provided proceeds forthright, while repeating the total reflection, in the first light guide layer until the light reaches the end surface on which the reflection means is provided, (ii) the light is reflected by the end surface on which the reflection means is provided, (iii) the light reverses its traveling direction, and (iv) the angle of the light being incident on the interface is changed when the light returns in a direction of the end surface opposite to the end surface on which the reflection means is provided so that the light is incident on the scattering light guide layer.

Moreover, the thickness of the second light guide layer is determined so that the light from the reflection means provided on the first light guide layer is guided to the scattering layer. Therefore, it is possible to reduce the thickness of the second light guide layer, as compared with a conventional arrangement of using two light guide plates.

Further, because the reflection means causes the light to proceed forward and backward in the light guide plate, it is possible to ensure reduction in thickness of the light guide plate, as compared with the conventional arrangement of using two light guide plates, reduction in weight, and improvement in efficiency of light utilization under the favor of no light loss at a connection portion of the light guide plates. Moreover, by using the light guide layers having different refractive indices, it becomes possible to differentiate (i) a route of the light propagating to the reflection means and (ii) a route of the light having reflected by the reflection means. Thus, the planar light source producing is realized.

Moreover, the light guide plate of the present invention may be so arranged that the scattering light guide layer includes two layers: (i) the second light guide layer constituted of a material having the refractive index n2 (n2 < n1) and (ii) the scattering layer including the light scattering object. With this arrangement, it is possible to separately form the second light guide plate and the scattering layer, that is, it is possible to produce the light guide plate capable of emitting the uniform light by using conventional arts.

Moreover, the light guide plate of the present invention may be so arranged that the scattering light guide layer is the second light guide layer which contains the light scattering object therein and is made of a material having the refractive index n2 (n2 < n1). With this arrangement, it becomes possible to form the second light guide layer and the light scattering object at the same time, with less number of fabrication steps. In addition, it is easy to adjust the concentration of the scattering objects, thereby easily controlling the front scattering and the back scattering.

Moreover, the light guide plate of the present invention may be so arranged that a function of scattering light is given to the second light guide layer by providing projections and depressions on a surface of the second light guide layer, the surface being opposite to a surface in contact with the first light guide layer. With this arrangement, it becomes possible to form complex projections and depressions which scatter light more efficiently than the reflection dots.

Moreover, the light guide plate of the present invention may be so arranged that the reflection means provided on the end surface (side surface) of the first light guide layer reflects the light, distributed in a certain range of angles with respect to the stacking surface, in the light having propagated in the first light guide layer so that an incident angle θ (angle relative to a normal line of the stacking surface) with respect to the scattering light guide layer is smaller than a critical angle θc (θc=sin⁻¹(n2/n1)). With this arrangement, substantially all the light beams having propagated in the first light guide layer is incident on the scattering light guide layer, thereby realizing the light guide plate which utilizes the light highly efficiently.

Moreover, the light guide body of the present invention is characterized in that the reflection means provided on the end surface (side surface) of the first light guide layer is constituted of a hologram. According to the above arrangement, each of the end surfaces of the above-described plurality of layers has a plain configuration, thereby omitting a process of cutting or die cutting for forming the reflection surface. Therefore, it is possible to reduce the thickness of the reflection means. Moreover, because the light guide plate is a simple rectangular solid, it becomes possible to simplify the manufacturing process, thereby producing the reflection means inexpensively.

Moreover, it is more preferable that the lighting apparatus of the present invention include (i) the -point light source or the liner light source, (ii) the light guide plate, and (iii) the light focusing optical element for focusing the light incident on the first light guide layer of the light guide plate, so that the light is focused in a certain range of angles with respect to the stacking surface of the light guide plate. With this arrangement, the angle of the light incident on the light guide plate from the light emitting means can be appropriately adjusted so that the efficiency of light utilization is maximized, and the amount of light obtained from the surface of the light guide body can be increased. Moreover, even when using a light source which emits light with an angular distribution wider than an angular distribution required by the light guide body, the optical element changes the angular distribution of the light from the light source, thus ensuring the utilization of the light source. Moreover, it is possible to efficiently change the light path so that the light proceeding forward does not diffuse, and the light proceeding backward diffuses.

Moreover, the lighting apparatus of the present invention may be so arranged that the light focusing optical element is the cylindrical lens. With this arrangement, in the case in which the light is incident on the light guide body from a light emitting means in which a plurality of point light sources, such as light emitting diodes, are set in line, (i) the range of light incident angles is narrowed down in the normal direction of a plurality of layers in the light guide body in order that the light is reflected at the interfaces, and (ii) the range of light incident angles is not narrowed down in a horizontal direction of the layers. Thus, (i) the light having been incident from the point light source, such as the light emitting diode, are mixed in the horizontal direction of the layers, so that the luminance nonuniformity and the color unevenness are eliminated, and (ii) in the normal direction, it is possible to prevent the light from being leaked, by exceeding the critical angle, to the outside of the light guide plate until the light is reflected by the reflection means provided on the opposite surface.

Moreover, the light guide plate of the present invention may be so arranged that an optical element having a function of focusing light is formed on an end surface on which the light is incident, that is, on the light guide surface, so that the light incident on the first light guide layer of the light guide plate from the light source is focused in a certain range of angles with respect to the stacking surface of the light guide plate. With the this arrangement, as compared with a case of forming and placing the optical element and the light guide body individually, it is possible to avoid optical property deterioration caused by displacement, and also possible to always obtain desired lighting property. Further, it is possible to reduce the light loss in the interface.

Moreover, the light guide plate of the present invention may be so arranged that the scattering light guide layer, the first light guide layer, and another scattering light guide layer are stacked in this order. With this arrangement, it is possible to realize with a simple arrangement a thin and light-weighted light guide plate capable of emitting the light from both surfaces.

Moreover, the light guide plate of the present invention may be so arranged that one surface of the scattering light guide layer serves as the reflection surface, which surface is opposite to a surface on which the first light guide layer is provided. The reflection surface is so formed that the light is emitted from only one surface of the flat light source. With this arrangement, it becomes possible to emit the light more efficiently by reflecting the stray light which has not been guided to a surface from which the light is emitted by scattering.

It is more preferable that the display apparatus of the present invention use the foregoing lighting apparatus. With this arrangement, even when the display apparatus uses the point light source, it is possible to obtain a bright and desired display image with less luminance nonuniformity and less color unevenness. Therefore, even when the point light sources or separate semiconductor light sources of three primary colors are used as the light source, the light beams therefrom can be mixed and changed into the planar light source. In this way, it becomes possible to use the planar light source as the backlight of the display panel. Thus, it is possible to realize the display apparatus which ensures the following advantages of the semiconductor light source: less power consumption, fine color reproduction, long life, mercury-free, and high-speed activation.

Moreover, for example, by combining the light guide plate of the present invention and red, green, and blue LEDs so as to constitute the lighting apparatus of general illumination, it is possible to constitute the lighting apparatus which reproduces colors finely without causing the color unevenness.

As described above, the light guide plate of the present invention ensures the following effects: the number of components are less than, for example, that of the arrangement disclosed in Non-Patent Document 1; the light guide plate is resistant to staining as it contains no prism; because the number of interfaces is small, the light loss between the prisms is small. On this account, for example, it is possible to avoid the defect that dust enters between the prisms, which is described in the arrangement disclosed in Non-Patent Document 1. On this account, the light guide plate of the present invention can be inexpensively manufactured. Moreover, the structure seldom require positioning, thereby simplifying the manufacturing process.

Moreover, the efficiency of light utilization of the light guide plate changes depending on its thickness. More specifically, the thicker the light guide plate is, the more easily the light can be incident on the end surface. Moreover, when the light guide plate is thick, the number of light reflection of light, which is traveling while repeating the total reflection, is reduced, thereby reducing light loss. Therefore, in consideration of only the efficiency of light utilization, it is preferable that the light guide plate be as thick as possible. In light of this, for example, the arrangement disclosed in Non-Patent Document 1 has serious difficulties in reducing the thickness of two light guide plates to half so as to equalize the thickness of two light guide plates and the thickness of one normal light guide plate. However, in the light guide plate of the present invention, the first light guide body 101 has substantially the same thickness as that of the conventional light guide plate, and the thickness of the second light guide body 3 is reduced. In this way, the light guide plate of the present invention has substantially the same thickness as that of the conventional light guide plate, while achieving the same efficiency of light utilization. Thus, the present invention ensures the sufficient effects. On this account, it is possible to reduce the thickness of the light guide plate as compared with the arrangement disclosed in Non-Patent Document 1.

Further, for example, unlike Non-Patent Document 2, minute designing of the shape of the end surface (interface) is not necessary, thus manufacture the light guide plate by a method other than casting. Therefore, it is possible to manufacture a large size light guide plate. With the advantage of easy fabrication, the light guide plate of the present invention can be produced at lower cost.

A light guide plate of the present invention includes a first light guide layer on which light from a light source is incident, made of a material having a refractive index n1; and a scattering light guide layer for emitting, as scattering light, light incident on the first light guide layer, the first light guide layer and the scattering light guide layer being stacked on each other in a direction orthogonal to a direction of light propagating in the first light guide layer, wherein: the scattering light guide layer includes at least (i) a second light guide layer made of a material having a refractive index n2 lower than the refractive index n1, adjacent to the first light guide layer, and (ii) a scattering layer for scattering light propagating to the second light guide layer; and the first light guide layer includes, on a surface opposite to a light guide surface on which the light is incident, reflection means for reflecting the light propagating in the first light guide layer so that the light is incident on the scattering light guide layer.

In the above arrangement, the first light guide layer and the scattering light guide layer are stacked with each other. Substantially all the light beams having been incident on the light guide surface of the first light guide layer proceeds forthright, while repeating the total reflection, in the first light guide layer until the light reaches the reflection means. Then, the light is reflected by the reflection means. The light having been reflected is incident on the scattering light guide layer. More specifically, the light having been reflected by the reflection means is incident on the second light guide layer, and then the light is incident on the scattering layer. The light having been incident on the scattering light guide layer (scattering layer) is emitted as the scattering light. In this case, the second light guide layer only has to guide the light to the scattering layer, therefore, the second light guide layer can be very thin. Therefore, for example, the thickness of the light guide plate can be reduced as compared with the conventional arrangement in which the color mixing and the planar light source producing are carried out by two separate light guide plates. Moreover, unlike the conventional arrangement in which the color mixing and the planar light source producing are carried out by one light guide plate, for example, it is not necessary to finely design the shape of the light guide plate. Therefore, the light guide plate can be manufactured easily as compared with the conventional art, so that it is possible to mass produce the light guide plates. Note that, the light propagation direction in the first light guide layer here denotes not a direction of local light propagation but the light propagation in the entire first light guide layer. That is, the direction of light propagating in the first light guide layer denotes the way from the light guide surface to the reflection means.

Further, it is more preferable that the light guide plate of the present invention be so arranged that light irradiates the first light guide layer, the light being so set that the irradiation angle is in a certain range of angles with respect to the light guide surface of the first light guide layer.

The light being so set that the irradiation angle is in a certain range means light being so adjusted that (i) the light having irradiated the light guide surface propagates in the first light guide layer from the light guide surface to the reflection means while repeating the total reflection, and (ii) the light having been reflected by the reflection means is incident on the second light guide layer. Moreover, with regard to the light being so set that the irradiation angle is in a certain range, it is more preferable that the light having been reflected by the reflection means propagates while undergoing the total reflection at the interface of the first light guide layer and the outside.

In the above arrangement, the light distributed in a certain range of angles with respect to the light guide surface irradiates the first light guide layer. Therefore, the light having irradiated the first light guide layer propagates to the reflection section in the first light guide layer while repeating the total reflection. Then, the light having been reflected by the reflection means is incident on the second light guide layer. The light having been incident on the second light guide layer becomes the scattering light in the scattering layer, and the scattering light is emitted to the outside (outside of the light guide plate). That is, the color mixing is carried out before the light having been incident on the first light guide layer reaches the reflection means. Then, only the light having been incident on the second light guide layer is emitted to the outside. Therefore, by irradiating the first light guide layer with the light distributed in the certain range of angles, it becomes possible to produce further uniform planar light source, and also possible to emit only the white light to the outside.

It is more preferable that the light guide plate of the present invention be so arranged that the first light guide layer includes on the light guide surface a light focusing optical element for focusing light incident on the first light guide layer in a certain range of angles with respect to the light guide surface.

According to this arrangement, it is possible that the light distributed in a certain range of angles can be incident on the first light guide layer. Therefore, it becomes possible to produce further uniform planar light source. Moreover, because the light focusing optical element is provided at the light guide surface, it is possible to further reduce the loss of the light incident on the first light guide layer. Moreover, for example, even when using the light source which emits light distributed in a range exceeding the above-described certain range, it is possible to preferably produce uniform planar light source.

It is more preferable that the light guide plate of the present invention be so arranged that the scattering layer and the second light guide layer are integrally formed.

In the above arrangement, the scattering layer and the second light guide layer are formed integrally. Therefore, it is possible to simplify the manufacturing process of the light guide plate.

It is more preferable that the light guide plate of the present invention be so arranged that the second light guide layer of the scattering light guide layer contains a light scattering object.

In the above arrangement, the light scattering object is contained in the second light guide layer. Therefore, it is possible to further reduce the thickness of the light guide plate.

It is more preferable that the light guide plate of the present invention be so arranged that the scattering layer is constituted of depressions and projections formed on a surface of the second light guide layer, the surface being opposite to a surface in contact with the first light guide layer.

In the above arrangement, the scattering layer is formed by projections and depressions on an outer surface (the above-described opposite surface) of the second light guide layer. Therefore, it is possible to from the scattering layer more easily.

It is more preferable that the light guide plate of the present invention be so arranged that the reflection means is so placed as to reflect light incident thereon within a range smaller than an angle shown by sin⁻¹ (n2/n1), when viewed from a direction perpendicular to a surface on which the scattering light guide layer is formed.

In the above arrangement, substantially all the light beams having propagated in the first light guide layer is incident on the scattering light guide layer (scattering layer). Therefore, it is possible to realize the light guide plate which utilizes the light highly efficiently.

It is more preferable that the light guide plate of the present invention be so arranged that the reflection means is a hologram.

With the above arrangement, it is possible to reduce the thickness of the reflection means because the reflection means is constituted of the hologram. Therefore, it is possible to reduce the thickness of the light guide plate in a side surface direction (in a direction of connecting the reflection means and the light guide surface). Therefore, for example, it is possible to preferably apply the light guide plate arranged as above to a display whose region other than a display region is small, that is, a narrow frame display.

It is more preferable that the light guide plate of the present invention be so arranged that the first light guide layer further includes on the surface opposite to a surface on which the scattering light guide layer is formed, another scattering light guide layer.

In the above arrangement, the scattering light guide layers are provided on both sides of the first light guide layer. With this, for example, it is possible to emit the light from both sides of the first light guide layer.

It is more preferable that the light guide plate of the present invention be so arranged that the scattering light guide layer further includes a reflection member on a surface opposite to a surface on which the first light guide layer is formed.

In the above arrangement, the reflection member is provide on a side of a surface of the scattering light guide layer, the surface opposite to a surface on which the first light guide layer is formed. Therefore, for example, even when there is the stray light in the scattering layer, it is possible to efficiently emit the light in a direction of irradiation.

In order to solve the above problems, a lighting apparatus of the present invention may include the light guide plate and a light source for irradiating the first light guide layer of the light guide plate with light.

With the above arrangement, it becomes possible to provide the lighting apparatus which can emit the uniform planar light.

It is more preferable that the lighting apparatus of the present invention be so arranged that the light source is so placed that an incident angle of the light incident on the first light guide layer with respect to the light guide surface of the first light guide layer falls in a predetermined range.

With the above arrangement, by irradiating the first light guide layer with the light distributed in a certain range of angles with respect to the light guide surface, (i) the lighting apparatus can be used as the uniform planar light source and (ii) only the white light can be emitted to the outside.

It is more preferable that the lighting apparatus of the present invention be so arranged that the light source includes a light focusing optical element for focusing the light incident on the first light guide layer of the light guide plate, so that the light is focused in a certain range of angles with respect to a stacking surface of the light guide plate.

In the above arrangement, the light source includes the light focusing optical element. Therefore, it is possible to irradiate the light guide plate with the light distributed in a certain range of angles. Therefore, it is possible to emit further uniform planar light.

It is more preferable that the lighting apparatus of the present invention be so arranged that the light focusing optical element is a cylindrical lens.

In the above arrangement, by using the cylindrical lens as the light focusing optical element it is possible to easily irradiate the light guide plate with the light distributed in a certain range of angles.

It is more preferable that the lighting apparatus of the present invention be so arranged that the light guide plate includes a plurality of the first light guide layer on the second light guide layer which are placed so that their light guide surfaces are opposed with a certain interval therebetween, and the light source is provided between the light guide surfaces.

In the above arrangement, the light source is provided between the light guide surfaces, so that the reflection means is provided on each of the outer end surfaces of the lighting apparatuses. Therefore, by combining the reflection means with each other, it becomes possible to place a plurality of lighting apparatuses side by side.

Moreover, in the above arrangement, one light source is provided for two first light guide layers. Therefore, it is possible to save space. Moreover, because a proportion of the area of light guide plate in the area of entire lighting apparatus is increased, it becomes possible to obtain the lighting apparatus capable of emitting the uniform light having less unevenness.

It is more preferable that the lighting apparatus of the present invention be so arranged as to include a mirror for guiding the light from the light source to the first light guide layer.

With this arrangement, it is possible to efficiently guide the light to the first light guide layer. Therefore, it becomes possible to provide the lighting apparatus capable of emitting bright light having less luminance nonuniformity and less color unevenness.

The flat light source apparatus of the present invention is so arranged as to include a plurality of lighting apparatuses of the present invention, the lighting apparatuses being placed side by side.

With this arrangement, it becomes possible to obtain the flat light source apparatus capable of emitting the bright light having a large area, less luminance nonuniformity, and less color unevenness.

The flat light source apparatus of the present invention is so arranged that the reflection means of one of two lighting apparatuses is opposed to reflection means of another lighting apparatus.

With this arrangement, it becomes possible to easily realize the flat light source apparatus in which no space is provided between the lighting apparatuses by combining the reflection means with each other. Therefore, it becomes possible to provide the flat light source apparatus capable of emitting bright light having a large area, less luminance nonuniformity, and less color unevenness.

The display apparatus of the present invention includes the light guide plate.

With this arrangement, it becomes possible to provide the display apparatus which is irradiated with the uniform planar light.

### INDUSTRIAL APPLICABILITY

The light guide plate and the lighting apparatus equipped therewith in accordance with the present invention are applicable to various lighting apparatuses, such as a backlight of an electric poster, an illumination table lamp, an illumination lamp attached to a ceiling or a wall, etc. The display apparatus in accordance with the present invention is applicable to a liquid crystal display, the electric poster, etc.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. A light guide plate (100; 120; 130; 140; 150) comprising:
a first light guide layer (101) on which light from a light source (105, 106) is incident, made of a material having a refractive index n1; and
a scattering light guide layer (103, 104; 110, 111) for emitting light as scattering light,
the first light guide layer (101) and the scattering light guide layer (103, 104; 110, 111) being stacked on each other,
wherein:
the scattering light guide layer (103, 104; 110, 111) includes (i) a second light guide layer (103) made of a material having a refractive index n2 lower than the refractive index n1, adjacent to the first light guide layer (101), and (ii) a scattering layer (104; 111) for scattering light propagating to the second light guide layer (103), **characterised in that**
the first light guide layer (101) includes, on an end surface opposite to a light guide surface on which the light is incident, reflection means (102) which changes an angle of light propagating in the first light guide layer (101) and reaching the end surface, so that the light is incident on the scattering light guide layer (103, 104; 110, 111), and
the first light guide layer (101) causes total reflection of light, incident on the first light guide layer (101) from the light source (105, 106), at (i) a surface on which the scattering light guide layer (103, 104; 110, 111) is formed and (ii) a rear surface.

2. The light guide plate as set forth in claim 1, wherein the first light guide layer (101) includes on the light guide surface a light focusing optical element (105) for focusing light incident on the first light guide layer (101) in a certain range of angles with respect to the light guide surface.

3. The light guide plate as set forth in claim 1, wherein the scattering layer (104) and the second light guide layer (103) are integrally formed.

4. The light guide plate as set forth in claim 1, wherein the second light guide layer (103) of the scattering light guide layer contains a light scattering object (116).

5. The light guide plate as set forth in claim 1, wherein the scattering layer (104) is constituted of depressions and projections formed on a surface of the second light guide layer (103), the surface being opposite to a surface in contact with the first light guide layer (101).

6. The light guide plate as set forth in claim 1, wherein the reflection means (102) is disposed so that light incident on the reflection means (102) is reflected at an angle smaller than an angle shown by sin⁻¹ (n2/n1), with respect to a normal direction to a surface on which the scattering light guide layer (103, 104; 110, 111) is formed.

7. The light guide plate as set forth in claim 1, wherein the reflection means (102) is a hologram.

8. The light guide plate as set forth in claim 1, wherein, the first light guide layer (101) further includes on the surface opposite to a surface on which the scattering light guide layer (103, 116) is formed, another scattering light guide layer (103, 116).

9. The light guide plate as set forth in claim 1, wherein the scattering light guide layer (103, 116) further includes a reflection member (115) on a surface opposite to a surface on which the first light guide layer (101) is formed.

10. A lighting apparatus (107; 127; 137; 147; 157; 167; 177) comprising a light guide plate (100; 120; 130; 140; 150) as set forth in any one of claims 1 to 9, and a light source (105, 106) for irradiating the first light guide layer (101) of the light guide plate (100; 120; 130; 140; 150) with light.

11. The lighting apparatus as set forth in claim 10, wherein the light source (105, 106) is so placed that an incident angle of the light incident on the first light guide layer (101) with respect to the light guide surface of the first light guide layer (101) falls in a predetermined range.

12. The lighting apparatus as set forth in claim 11, wherein the light source includes a light focusing optical element (105, 114) for focusing the light incident on the first light guide layer (101) of the light guide plate (100; 120; 130; 140), so that the light is focused in a certain range of angles with respect to a stacking surface of the light guide plate (100; 120; 130; 140).

13. The lighting apparatus as set forth in claim 12, wherein the light focusing optical element (105) is a cylindrical lens.

14. The lighting apparatus as set forth in claim 10, wherein the light guide plate (100) includes a plurality of the first light guide layer (101) on the second light guide layer (103) which are placed so that light guide surfaces of the plurality of the first light guide layer (101) are opposed with a certain interval therebetween, and the light source (106) is provided between the light guide surfaces.

15. The lighting apparatus as set forth in claim 10, further comprising a mirror (118) for guiding the light from the light source (106) to the first light guide layer (101).

16. A flat light source apparatus (167; 177) comprising a plurality of the lighting apparatus (107) as set forth in any one of claims 10 to 15, the lighting apparatuses being placed side by side.

17. The flat light source apparatus as set forth in claim 16, wherein reflection means (102) of one of two lighting apparatuses (107, 107) is opposed to reflection means of another lighting apparatus.

18. A display apparatus comprising the light guide plate (100; 120; 130; 140; 150) as set forth in any one of claims 1 to 9.

## Patentansprüche

1. Lichtleiterplatte (100; 120; 130; 140; 150) mit:
einer ersten Lichtleiterschicht (101), auf die Licht von einer Lichtquelle (105, 106) fällt, und die aus einem Material mit einem Brechungsindex n1 besteht; und
einer streuenden Lichtleiterschicht (103, 104; 110, 111)) zum Emittieren von Licht als Streulicht;
wobei die erste Lichtleiterschicht (101) und die streuende Lichtleiterschicht (103, 104; 110, 111)) aufeinander gestapelt sind;
wobei:
die streuende Lichtleiterschicht (103, 104; 110, 111)) Folgendes aufweist: (i) eine zweite Lichtleiterschicht (103) aus einem Material mit einem Brechungsindex n2 unter dem Brechungsindex n1, benachbart zur ersten Lichtleiterschicht (101); und (ii) eine Streuschicht (104; 111) zum Streuen von Licht, das sich zur zweiten Lichtleiterschicht (103) ausbreitet;
**dadurch gekennzeichnet, dass**
die erste Lichtleiterschicht (101) auf einer Endfläche entgegengesetzt zu einer Lichtleiterfläche, auf die das Licht einfällt, eine Reflexionseinrichtung (102) aufweist, die den Winkel des sich in der ersten Lichtleiterschicht (101) ausbreitenden und die Endfläche erreichenden Lichts so ändert, dass das Licht auf die streuende Lichtleiterschicht (103, 104; 110, 111) fällt; und
die erste Lichtleiterschicht (101) für Totalreflexion von von der Lichtquelle (105, 106) auf die erste Lichtleiterschicht (101) fallendem Licht an (i) einer Fläche, auf der die streuende Lichtleiterschicht (103, 104; 110, 111) ausgebildet ist, und (ii) einer hinteren Fläche sorgt.

2. Lichtleiterplatte nach Anspruch 1, bei der die erste Lichtleiterschicht (101) auf der Lichtleiterfläche ein Licht fokussierendes optisches Element (105) zum Fokussieren von auf die erste Lichtleiterschicht (101) fallendem Licht in einen bestimmten Winkelbereich in Bezug auf die Lichtleiterfläche aufweist.

3. Lichtleiterplatte nach Anspruch 1, bei der die Streuschicht (104) und die zweite Lichtleiterschicht (103) integral ausgebildet sind.

4. Lichtleiterplatte nach Anspruch 1, bei der die zweite Lichtleiterschicht (103) der streuenden Lichtleiterschicht ein Lichtstreuobjekt (116) aufweist.

5. Lichtleiterplatte nach Anspruch 1, bei der die Streuschicht (104) aus an der Oberfläche der zweiten Lichtleiterschicht (103) ausgebildeten Vertiefungen und Vorsprüngen besteht, wobei diese Fläche von einer Fläche abgewandt ist, die mit der ersten Lichtleiterschicht (101) in Kontakt steht.

6. Lichtleiterplatte nach Anspruch 1, bei der die Reflexionseinrichtung (102) so angeordnet ist, dass auf sie fallendes Licht unter einem Winkel reflektiert wird, der kleiner als ein durch sin⁻¹ (n2/n1) angegebener Winkel in Bezug auf eine Richtung normal zu einer Fläche, auf der die streuende Lichtleiterschicht (103, 104; 110, 111) ausgebildet ist, ist.

7. Lichtleiterplatte nach Anspruch 1, bei der die Reflexionseinrichtung (102) eine Hologramm ist.

8. Lichtleiterplatte nach Anspruch 1, bei der die erste Lichtleiterschicht (101) ferner auf der Fläche, die von der Fläche abgewandt ist, auf der die streuende Lichtleiterschicht (103, 116)) ausgebildet ist, eine andere streuende Lichtleiterschicht (103, 116) aufweist.

9. Lichtleiterplatte nach Anspruch 1, bei der die streuende Lichtleiterschicht (103, 116) auf einer Fläche abgewandt von der Fläche, auf der die erste Lichtleiterschicht (101) ausgebildet ist, ferner ein Reflexionselement (115) aufweist.

10. Beleuchtungsvorrichtung (107; 127; 137; 147; 157; 167; 177) mit einer Lichtleiterplatte (100; 120; 130; 140; 150), wie sie in einem der Ansprüche 1 bis 9 dargelegt ist, und einer Lichtquelle (105, 106) zum Bestrahlen der ersten Lichtleiterschicht (101) der Lichtleiterplatte (100; 120; 130; 140; 150) mit Licht.

11. Beleuchtungsvorrichtung nach Anspruch 10, bei der die Lichtquelle (105, 106) so platziert ist, dass der Einfallswinkel des auf die erste Lichtleiterschicht (101) fallenden Lichts in Bezug auf die Lichtleiterfläche der ersten Lichtleiterschicht (101) in einen vorbestimmten Bereich fällt.

12. Beleuchtungsvorrichtung nach Anspruch 11, bei der die Lichtquelle ein Licht fokussierendes optisches Element (105, 114) zum Fokussieren des auf die erste Lichtleiterschicht (101) der Lichtleiterplatte (100; 120; 130; 140) fallenden Lichts in solcher Weise, dass das Licht in einen bestimmten Winkelbereich in Bezug auf eine Stapelfläche der Lichtleiterplatte (100; 120; 130; 140) fokussiert wird, aufweist.

13. Beleuchtungsvorrichtung nach Anspruch 12, bei der das Licht fokussierende optische Element (105) eine Zylinderlinse ist.

14. Beleuchtungsvorrichtung nach Anspruch 10, bei der die Lichtleiterplatte (100) mehrere erste Lichtleiterschichten (101) auf der zweiten Lichtleiterschicht (103) aufweist, die so platziert sind, dass Lichtleiterflächen der mehreren ersten Lichtleiterschichten (101) mit einem bestimmten Intervall dazwischen einander gegenüber stehen und die Lichtquelle (106) zwischen den Lichtleiterflächen vorhanden ist.

15. Beleuchtungsvorrichtung nach Anspruch 10, ferner mit einem Spiegel (118) zum Leiten des Lichts von der Lichtquelle (106) zur ersten Lichtleiterschicht (101).

16. Flache Lichtquellenvorrichtung (167; 177) mit mehreren Beleuchtungsvorrichtungen (107) nach einem der Ansprüche 10 bis 15, wobei diese Beleuchtungsvorrichtungen nebeneinander platziert sind.

17. Flache Lichtquellenvorrichtung nach Anspruch 16, bei der eine Reflexionseinrichtung (102) einer von zwei Beleuchtungsvorrichtungen (107, 107) einer Reflexionseinrichtung der anderen Beleuchtungsvorrichtung gegenüber steht.

18. Anzeigevorrichtung mit der Lichtleiterplatte (100; 120; 130; 140; 150) nach einem der Ansprüche 1 bis 9.

## Revendications

1. Plaque de guidage de lumière (100; 120; 130; 140; 150) comprenant:
une première couche de guidage de lumière (101) sur laquelle une lumière provenant d'une source de lumière (105, 106) est reçue et qui est formée d'une matière ayant un indice de réfraction n1; et
une couche de guidage de lumière de diffusion (103, 104; 110, 111) destinée à émettre une lumière sous la forme d'une lumière de diffusion,
la première couche de guidage de lumière (101) et la couche de guidage de lumière de diffusion (103, 104; 110, 111) étant superposées l'une à l'autre,
dans laquelle:
la couche de guidage de lumière de diffusion (103, 104; 110, 111) comprend (i) une seconde couche de guidage de lumière (103) formée d'une matière ayant un indice de réfraction n2 inférieur à l'indice de réfraction n1 et adjacente à la première couche de guidage de lumière (101), et (ii) une couche de diffusion (104; 111) destinée à diffuser une lumière qui se propage en direction de la seconde couche de guidage de lumière (103), **caractérisée en ce que**
la première couche de guidage de lumière (101) comprend, sur une surface d'extrémité opposée à une surface de guidage de lumière sur laquelle la lumière est reçue, des moyens réfléchissants (102) qui changent un angle suivant lequel la lumière se propage dans la première couche de guidage de lumière (101) et atteint la surface d'extrémité, afin que la lumière soit reçue sur la couche de guidage de lumière de diffusion (103, 104; 110, 111), et
la première couche de guidage de lumière (101) provoque une réflexion totale de la lumière reçue sur elle à partir de la source de lumière (105, 105), (i) au niveau d'une surface sur laquelle la couche de guidage de lumière de diffusion (103, 104; 110, 111) est formée et (ii) au niveau d'une surface arrière.

2. Plaque de guidage de lumière telle que définie dans la revendication 1, dans laquelle la première couche de guidage de lumière (101) comprend sur la surface de guidage de lumière un élément optique de focalisation de lumière (105) destiné à concentrer la lumière reçue sur la première couche de guidage de lumière (101) dans une plage d'angles donnée par rapport à la surface de guidage de lumière.

3. Plaque de guidage de lumière telle que définie dans la revendication 1, dans laquelle la couche de diffusion (104) et la seconde couche de guidage de lumière (103) sont formées de manière solidaire.

4. Plaque de guidage de lumière telle que définie dans la revendication 1, dans laquelle la seconde couche de guidage de lumière (103) de la couche de guidage de lumière de diffusion contient un objet diffuseur de lumière (116).

5. Plaque de guidage de lumière telle que définie dans la revendication 1, dans laquelle la couche de diffusion (104) est constituée de creux et de protubérances formés sur une surface de la seconde couche de guidage de lumière (103), la surface étant opposée à une surface en contact avec la première couche de guidage de lumière (101).

6. Plaque de guidage de lumière telle que définie dans la revendication 1, dans laquelle les moyens réfléchissants (102) sont disposés de façon que la lumière reçue sur eux soit réfléchie suivant un angle inférieur à un angle représenté par sin⁻¹ (n2/n1), par rapport à une direction normale à une surface sur laquelle la couche de guidage de lumière de diffusion (103, 104; 110, 111) est formée.

7. Plaque de guidage de lumière telle que définie dans la revendication 1, dans laquelle les moyens réfléchissants (102) sont un hologramme.

8. Plaque de guidage de lumière telle que définie dans la revendication 1, dans laquelle la première couche de guidage de lumière (101) comprend également, sur la surface opposée à une surface sur laquelle la couche de guidage de lumière de diffusion (103, 116) est formée, une autre couche de guidage de lumière de diffusion (103, 116).

9. Plaque de guidage de lumière telle que définie dans la revendication 1, dans laquelle la couche de guidage de lumière de diffusion (103, 116) comprend également un élément réfléchissant (115) sur une surface opposée à une surface sur laquelle la première couche de guidage de lumière (101) est formée.

10. Appareil d'éclairage (107; 127; 137; 147; 157; 167; 177) comprenant une plaque de guidage de lumière (100; 120; 130; 140; 150) telle que définie dans l'une quelconque des revendications 1 à 9, et une source de lumière (105, 106) destinée à projeter une lumière sur la première couche de guidage de lumière (101) de la plaque de guidage de lumière (100; 120; 130; 140; 150).

11. Appareil d'éclairage tel que défini dans la revendication 10, dans lequel la source de lumière (105, 106) est placée de façon qu'un angle d'incidence de la lumière reçue sur la première couche de guidage de lumière (101) par rapport à la surface de guidage de lumière de la première couche de guidage de lumière (101) se situe dans une plage prédéterminée.

12. Appareil d'éclairage tel que défini dans la revendication 11, dans lequel la source de lumière comprend un élément optique de focalisation de lumière (105, 114) destiné à concentrer la lumière reçue sur la première couche de guidage de lumière (101) de la plaque de guidage de lumière (100; 120; 130; 140) afin que la lumière soit concentrée dans une plage d'angles donnée par rapport à une surface de superposition de la plaque de guidage de lumière (100; 120; 130; 140).

13. Appareil d'éclairage tel que défini dans la revendication 12, dans lequel l'élément optique de focalisation de lumière (105) est une lentille cylindrique.

14. Appareil d'éclairage tel que défini dans la revendication 10, dans lequel la plaque de guidage de lumière (100) comprend de multiples premières couches de guidage de lumière (101) sur la seconde couche de guidage de lumière (103) qui sont placées de façon que des surfaces de guidage de lumière des multiples premières couches de guidage de lumière (101) soient opposées en étant séparées les unes des autres d'un intervalle donné, la source de lumière (106) étant disposée entre les surfaces de guidage de lumière.

15. Appareil d'éclairage tel que défini dans la revendication 10, comprenant également un miroir (118) destiné à guider la lumière de la source de lumière (106) à la première couche de guidage de lumière (101).

16. Appareil à source de lumière plane (167; 177) comprenant plusieurs appareils d'éclairage (107) tels que définis dans l'une quelconque des revendications 10 à 15, les appareils d'éclairage étant placés côte à côte.

17. Appareil à source de lumière plane tel que défini dans la revendication 16, dans lequel des moyens réfléchissants (102) de l'un de deux appareils d'éclairage (107, 107) sont opposés à des moyens réfléchissants de l'autre appareil d'éclairage.

18. Appareil d'affichage comprenant la plaque de guidage de lumière (100; 120; 130; 140; 150) telle que définie dans l'une quelconque des revendications 1 à 9.
